(19) Europäisches Patentamt / European Patent Office / Office européen des brevets

(11) **EP 2 161 641 B1**

(12) **EUROPEAN PATENT SPECIFICATION**

(45) Date of publication and mention
of the grant of the patent:
**09.11.2011 Bulletin 2011/45**

(51) Int Cl.:
***G05D 1/02*** *(2006.01)*

(21) Application number: **09169233.5**

(22) Date of filing: **02.09.2009**

(54) **Driving skill improvement device and driving skill improvement method**

Vorrichtung zur Verbesserung der Fahrtauglichkeit und Verfahren zur Verbesserung der Fahrtauglichkeit

Dispositif d'amélioration de l'aptitude à conduire un véhicule et procédé d'amélioration de l'aptitude à conduire

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **03.09.2008 JP 2008225469**

(43) Date of publication of application:
**10.03.2010 Bulletin 2010/10**

(73) Proprietor: **Hitachi Ltd.**
**Tokyo 100-8280 (JP)**

(72) Inventors:
• **TAKAHASHI, Kunya**
**Tokyo 100-8220 (JP)**

• **IMURA, Shinya**
**Tokyo 100-8220 (JP)**

(74) Representative: **MERH-IP**
**Matias Erny Reichl Hoffmann**
**Paul-Heyse-Strasse 29**
**80336 München (DE)**

(56) References cited:
**EP-A- 1 990 259        DE-A1-102007 007 896**
**US-A- 5 991 675        US-A1- 2005 159 853**
**US-A1- 2007 001 831    US-A1- 2007 145 819**

**Description**

BACKGROUND OF THE INVENTION

Field of the Invention

The present invention relates to a driving skill improvement device and a driving skill improvement method for assisting driving by a driver so that an optimal operation state of a vehicle is achieved.

Background Art

Conventionally, there are known devices such as an adaptive cruise control device or a lane departure prevented device which partially cany out driving operations for a driver and automatically control inter-vehicle distance and driving within lanes. While such devices are extremely useful from the perspective of reducing the driving load of a driver, there is also the risk of impairing the driving skill of the drive due to system overdependence. In addition, the driving skills of drivers differ significantly from person to person. Even when driving the same road, an inexperienced driver is unable to smoothly perform acceleration or deceleration and turns which are performed smoothly by an experienced driver, thereby resulting in driving involving unnecessary acceleration or deceleration. Such driving may, in turn, result in a decrease in fuel efficiency and stability of vehicle behavior, thereby necessitating improved driving skills of the driver from the perspectives of reducing greenhouse gas emission and reducing traffic accidents.

So far, as systems for presenting appropriate driving states to a driver, there are known systems that improve driving operations of the driver by presenting appropriate driving information when the driver's driving is inappropriate (for example, JP Patent Publication (Kokai) No. 2002-074597A (2002)) and systems that prompt the driver to decelerate before curves (for example, JP Patent Publication (Kokai) No. 2004-151803A (2004) and JP Patent Publication (Kokai) No. 2007-133486A (2007)).

DE 10 2007 007896 discloses a driver assistance system having sensors for determining a condition based on traffic conditions, vehicle and driver, where the assistance system selects the presentation type of the support function based on the determined condition.

US 5 991675 discloses a vehicle control system that estimates the driving skill of a vehicle operator according to how a driving operation is executed by the vehicle operator. The driving skill can be estimated by comparing an actual trajectory of a vehicle with an ideal or reference vehicle trajectory. The estimated driving skill is used as a control parameter of a vehicle steering system which, for instance, provides a steering property depending on the yaw rate of the vehicle, or provides a reaction opposing a steering input according to the yaw rate of the vehicle.

US 2007/145819 discloses a vehicle stability enhancement system that is adapted for driver skill level. The system includes a driver skill recognition processor that determines the driver skill level based on a driver model that uses certain parameters, such as a steering gain factor and a time delay factor. The driver skill level is used to adjust the damping ratio and natural frequency in dynamic filters in a dynamic command generator to adjust a desired yaw rate signal and a desired side-slip signal. The driver skill level is also used to generate a yaw rate multiplication factor and a side-slip multiplication factor that modify a yaw rate stability signal and a side-slip stability signal in a dynamic control computation processor that generates a stability control signal.

US 2007/001831 describes a system for analyzing and evaluating the performance and behavior of a driver of a vehicle. A vehicle sensor utility is used to monitor the state of the vehicle while being driven by the driver. A raw data stream from the vehicle sensor utility is input to a driving event handler that detects driving events in the raw data stream and outputs to a maneuver detector a driving event string. The maneuver detector is configured to recognize patterns of driving maneuvers. One or more ratings of the driver's driving performance are calculated based upon the detected driving behavior in comparison to characteristic driving behavior previously stored in a database.

However, the system described in JP Patent Publication (Kokai) Nb. 2002-074597A (2002) is for presenting information that prompts the driver to drive safely in traffic scenes involving unsafe driving by the driver (such as insufficient deceleration when entering a T-intersection, and is not intended to present information that enables the driver to control vehicle behavior in an appropriate manner.

In addition, the systems described in JP Patent Publication (Kokai) No. 2004-151803A (2004) and JP Patent Publication (Kokai) No. 2007-133486A (2007) merely suggest deceleration before curves and are not designed to present sufficient information on turning and acceleration after deceleration.

The present invention has been made in consideration of the above circumstances, and an object thereof is to provide a driving skill improvement device capable of presenting information appropriate from the perspective of vehicle behavior to the driver to effectively improve driving skills of the driver.

This object is achieved by the subject-matter according to the independent claims. The dependent claims refer to preferred embodiments of the invention.

In addition, a driving skill improvement method according to the present invention sets at least one of: a drive assist mode in which an operation state of a driver and a motion state of a vehicle are detected, an acceleration indicator is computed based on information on the detected operation state and motion state, and the acceleration of the vehicle is controlled based on the acceleration indicator; an information mode in which at least one of the acceleration indicator, the motion state of the vehicle, and the operation state of the driver is presented to the driver; an evaluation of driving skill mode in which the driving skill of the driver is evaluated; and a combination mode in which at least two of the drive assist mode, the information mode, and the evaluation of driving skill mode are combined, and executes at least one of the set modes in response to a request from the driver.

In a preferred embodiment of the driving skill improvement device according to the present invention, a driver is able to obtain information necessary for driving skills as needed by selecting a mode that best suits his/her needs. In addition, by presenting appropriate information to the user and evaluating driving skills, the driving skill improvement device according to the present invention can raise a driver's awareness of his/her driving skills and, furthermore, provide new driving pleasure made possible by improved driving skills.

BRIEF DESCRIPTION OF THE DRAWINGS

FIG. 1A is a schematic configuration diagram of the driving skill improvement device according to the first embodiment.
FIG. 1B is a system block diagram of the driving skill improvement device according to the first embodiment.
FIG. 2 is a diagram used to describe a difference between longitudinal acceleration and jerk due to differences among drivers according to the first embodiment.
FIG. 3 is a diagram used to describe acceleration during turning involving deceleration and wheel load change according to the first embodiment.
FIG. 4 is a diagram used to describe a deceleration method according to the first embodiment.
FIG. 5 is a diagram used to describe a deceleration method with a different acceleration according to the first embodiment.
FIG. 6 is a flowchart showing operations of the driving skill improvement device according to the first embodiment.
FIG. 7 is a flowchart showing operations in the information mode in an information mode of the driving skill improvement device according to the first embodiment.
FIG. 8 is a diagram used to describe an example of an information presentation method in the information mode of the driving skill improvement device according to the first embodiment.
FIG. 9 is a diagram used to describe another example of an information presentation method in the information mode of the driving skill improvement device according to the first embodiment.
FIG. 10 is a diagram used to describe another example of an information presentation method in the information mode of the driving skill improvement device according to the first embodiment.
FIG. 11 is a diagram used to describe another example of an information presentation method in the information mode of the driving skill improvement device according to the first embodiment.
FIG. 12 is a flowchart showing operations in an evaluation of driving skill mode of the driving skill improvement device according to the first embodiment.
FIG. 13 is a diagram used to describe an example of a skill evaluation method in the evaluation of driving skill mode of the driving skill improvement device according to the first embodiment.
FIG. 14 is a diagram used to describe another example of a skill evaluation method in the evaluation of driving skill mode of the driving skill improvement device according to the first embodiment.
FIG. 15 is a diagram used to describe another example of a skill evaluation method in the evaluation of driving skill mode of the driving skill improvement device according to the first embodiment.
FIG. 16 is a diagram used to describe an example of a skill evaluation presentation method in the evaluation of driving skill mode of the driving skill improvement device according to the first embodiment.
FIG. 17 is a diagram used to describe another example of a skill evaluation presentation method in the evaluation of driving skill mode of the driving skill improvement device according to the first embodiment.
FIG. 18 is a flowchart showing operations in a drive assist mode of the driving skill improvement device according to the first embodiment.
FIG. 19 is a flowchart showing computation processing of a brake target acceleration in the drive assist mode of the driving skill improvement device according to the first embodiment.
FIG. 20 is a flowchart showing computation processing of an accelerator target acceleration in the drive assist mode of the driving skill improvement device according to the first embodiment.
FIG. 21 is a diagram used to describe a computation method of a brake target acceleration in the drive assist mode of the driving skill improvement device according to the first embodiment.

FIG. 22 is a diagram used to describe a computation method of an accelerator target acceleration in the drive assist mode of the driving skill improvement device according to the first embodiment.

FIG. 23 is a diagram used to describe a computation method of a brake target acceleration and an accelerator target acceleration in the drive assist mode of the driving skill improvement device according to the first embodiment.

FIG. 24 is a diagram used to describe an example of an information presentation method in the information mode of the driving skill improvement device according to the first embodiment.

FIG. 25 is a system block diagram showing a configuration of a driving skill improvement device according to a second embodiment.

FIG. 26 is a flowchart showing operations of the driving skill improvement device according to the second embodiment.

FIG. 27 is a flowchart showing computation processing in an evaluation of driving skill mode of the driving skill improvement device according to the second embodiment.

FIG. 28 is a flowchart showing computation processing in the evaluation of driving skill mode of the driving skill improvement device according to the second embodiment.

FIG. 29 is a flowchart showing computation processing in an information mode of the driving skill improvement device according to the second embodiment.

FIG. 30 is a system block diagram showing a configuration of a driving skill improvement device according to a third embodiment of the present invention.

FIG. 31 is a system block diagram showing a configuration of a driving skill improvement device according to a fourth embodiment.

FIG. 32 is a flowchart showing operations of the driving skill improvement device according to the fourth embodiment of the present invention.

FIG. 33 is a flowchart showing computation processing in an information mode of the driving skill improvement device according to the fourth embodiment.

FIG. 34 is a flowchart showing computation processing in an evaluation of driving skill mode of the driving skill improvement device according to the fourth embodiment.

FIG. 35 is a diagram used to describe an example of an information presentation method in an information presentation and evaluation mode of the driving skill improvement device according to the fourth embodiment.

DESCRIPTION OF SYMBOLS

1    Vehicle information detecting block
2    Mode selecting block
3    Driving skill computing block
4    Information presenter
5    External information acquiring block
6    Brake actuator

7    Brake lamp
8    Electronic control throttle (actuator)
9    Driver information storage block
10   Control unit
40   Mode switch
50   Network communication block

DETAILED DESCRIPTION OF THE PREFERRED EMBODIMENTS

Hereinafter, preferred embodiments of the driving skill improvement device will be described with reference to the drawings.

[First Embodiment]

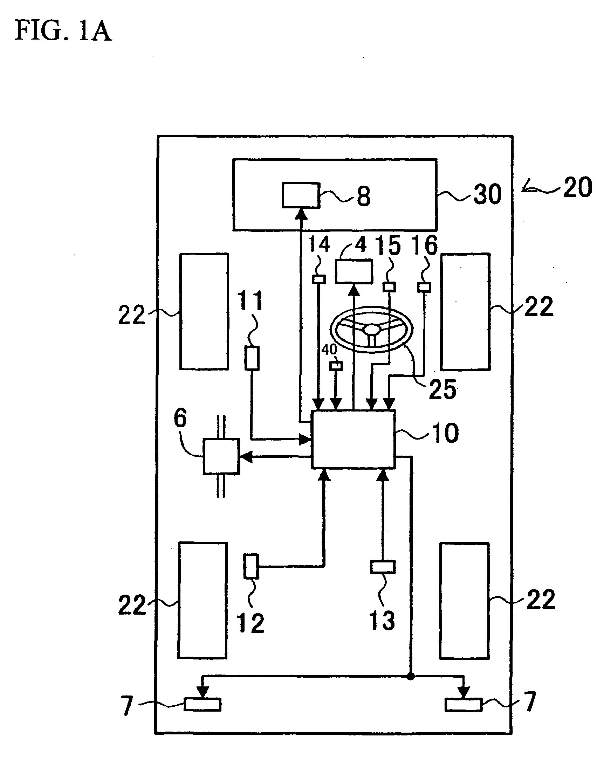

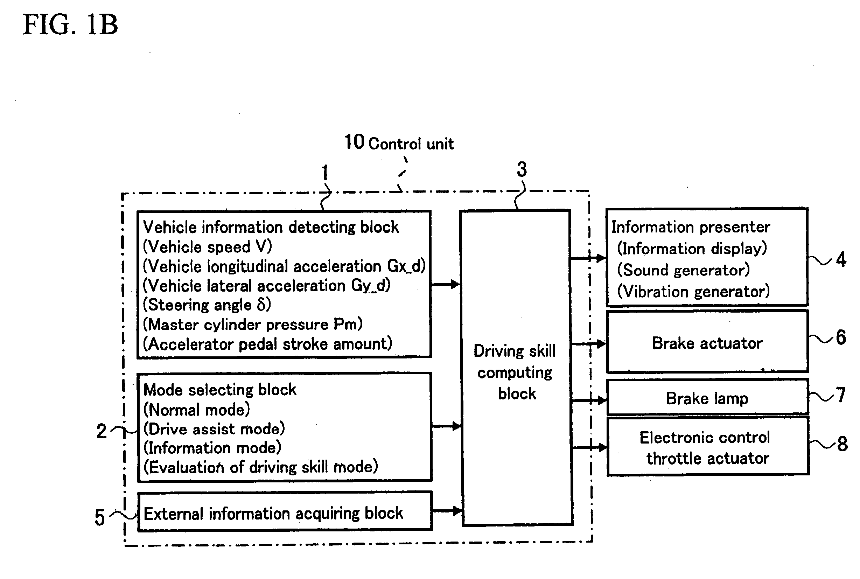

First, a configuration, operations, and operational advantages of a driving skill improvement device according to a first embodiment will be described with reference to FIGS. 1 to 24.

FIG. 1(a) is a schematic configuration diagram of the driving skill improvement device according to the first embodiment, and FIG. 1(b) is a system block diagram of the driving skill improvement device according to the first embodiment.

The driving skill improvement device according to the present embodiment is to be mounted on a vehicle 20 comprising front and rear wheels 22, an engine 30, a steering handle 25, and the like, and includes a control unit with a built-in microcomputer for performing various control on the vehicle. The control unit 10 is supplied with signals from a vehicle speed sensor 11, a longitudinal acceleration sensor 12, a lateral acceleration sensor 13, a steering angle sensor 14, a brake sensor 15 (which, for example, detects master cylinder pressure), an accelerator sensor 16 (which, for example, detects an accelerator pedal stroke), a mode switch 40, and the like. The control unit 10 functionally comprises: a vehicle information detecting block 1 for detecting a motion state of the vehicle and an operation amount by a driver based on signals from the sensors; a mode selecting block 2 for setting respective modes to be described later and for selecting, based on a request from the driver (a signal from the mode switch 40), which mode is to be executed; an outside information acquiring block 5 for acquiring outside information; and a driving skill computing block 3 for issuing control instructions based on information from the vehicle information detecting block 1, the mode selecting block 2, and the outside information acquiring block 5 to an information presenter 4 such as a display which presents information to the driver, a brake actuator 6 which generates braking force on each wheel 22, a brake lamp 7 which notifies deceleration of the vehicle to following vehicles; an electronic control throttle actuator 8 which controls the torque of an engine 30, and the like.

More specifically, the vehicle information detecting block 1 either detects or estimates a steering angle 8, a vehicle body speed V of the vehicle, a longitudinal acceleration Gx_d, a lateral acceleration Gy_d, a master cylinder pressure Pm, and an accelerator pedal stroke amount. In this case, the vehicle body speed V may be estimated from wheel speed information of each wheel or the vehicle body speed may be directly detected using an outside sensor or the like. In addition, a steering torque or a brake pedal stroke amount may be detected or estimated as the operating amount of the driver. Furthermore, a longitudinal jerk Jx_d and a lateral jerk Jy_d may be detected as a state of motion of the vehicle.

The mode selecting block 2 performs switching and selection to a requested mode that is requested by the driver from the normal mode, the drive assist mode, the information mode, the evaluation of driving skill mode, and the like which are set in advance. The switching and selection of modes at this point may either be performed using a manual switch such as a button switch or a dial switch, or performed using speech by recognizing the speech of the driver. Alternatively, mode selection may be automatically performed based on vehicle information. For example, when passenger detecting means which detects the presence or absence of a passenger other than the driver is provided, the drive assist mode may be set to be automatically executed when the presence of a passenger is detected. The mode to be automatically selected at this point need not necessarily be limited to the drive assist mode, and may be arranged to be set in advance by the driver. Moreover, the passenger detecting means described above may be seatbelt activation detecting means or means for measuring the load on a seat.

The modes selectable by the mode selecting block 2 need not necessarily be limited to the individual modes described above, and may instead be a mode combining a plurality of modes such as a mode (information display and evaluation mode) which combines the information display mode and the evaluation of driving skill mode. Furthermore, all of the aforementioned modes need not be provided, and providing at least one mode in addition to the normal mode shall suffice. In the present embodiment, a case will be described in which the drive assist mode, the information mode, and the evaluation of driving skill mode are provided in addition to the normal mode.

The driving skill computing block 3 computes a driving skill assist control amount in correspondence with the requested mode from the steering angle δ, the vehicle body speed V of the vehicle, the longitudinal acceleration Gx_d, the lateral acceleration Gy_d, the master cylinder pressure Pm, and the requested mode selected by the mode selecting block 2, and computes drive control amounts of the information presenter 4, the brake actuator 6, the brake lamp 7, and the electronic control throttle actuator 8.

The outside information acquiring block 5 accepts input of information on: an obstacle existing around the vehicle, relative distance, speed, and acceleration of the obstacle with respect to the vehicle, the width of the obstacle; course configuration, road surface state, lane width in the direction of travel of the vehicle; traffic signal information along the route of the vehicle, and the like. As for the outside information acquiring means, either obstacle recognizing means such as a laser radar, a millimeter-wave sensor, a camera and the like or communication means such as inter-vehicle communication, road-to-vehicle communication, GPS and the like may be used.

As for the information presenter 4, an information display capable of visually providing information to the driver, a sound generator capable of acoustically providing information to the driver, a vibration generator capable of haptically providing information to the driver, and the like may be used. In this case, the vibration generator need not necessarily be included. In addition, in the case of a vehicle mounted with a navigation system, a display for displaying navigation information may be used as the information display. Furthermore, a car-mounted speaker may be used as the sound generator.

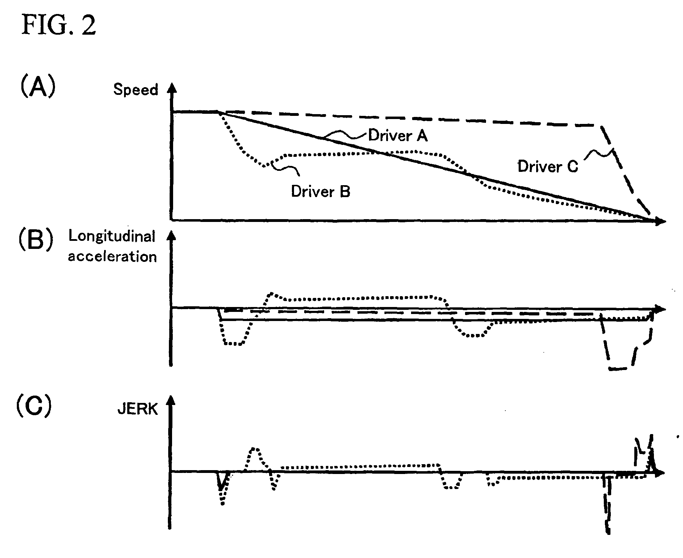

Next, a method of creating an acceleration indicator and a driving skill evaluation method will be described with reference to FIGS. 2 to 5.

In this case, with respect to a scene such as acceleration or deceleration or turning in which an acceleration is generated, driving which minimizes a sum of squares of jerk generated on the vehicle is assumed to be ideal driving, whereby an acceleration indicator is created so as to minimize the sum of squares of jerk when an acceleration is generated.

In other words, for example, when deceleration is performed during straight-ahead driving by repeating acceleration and deceleration as in the case of drive B shown in FIG. 2, the sum of squares of jerk generated on the vehicle until stoppage increases. In addition, even when deceleration is constant as in the case of driver C, the sum of squares of jerk increases when significant longitudinal acceleration is generated abruptly. As shown, the sum of jerk absolute values increases in driving which includes many wasteful acceleration or deceleration and in driving which includes abrupt changes in acceleration. Such driving cannot be considered preferable given the decrease in fuel efficiency due to acceleration or deceleration, greater instability of vehicle behavior due to abrupt deceleration, the increase in the risk of rear-end collisions by a subsequent vehicle, and the like. Therefore, it is obvious that, in regards to deceleration during straight-ahead driving, it is desirable to generate longitudinal acceleration of an appropriate magnitude with a small jerk to decelerate at a constant longitudinal acceleration, and as a result, the sum of squares of jerk is reduced. Moreover, while there are differences among individual preferences, an acceleration value of less than 3 m/s$^2$ is considered desirable as the acceleration (longitudinal acceleration, lateral acceleration) to be generated during normal driving.

In addition, during turning such as when making a left or right turn at a curve or an intersection, a significant difference in acceleration change among drivers is rarely manifested as long as the vehicle speed at the start of turning enables turning at an appropriate lateral acceleration. However, during turning involving acceleration or deceleration such as when entering and turning a curve while deceleration, differences in acceleration change among drivers are common.

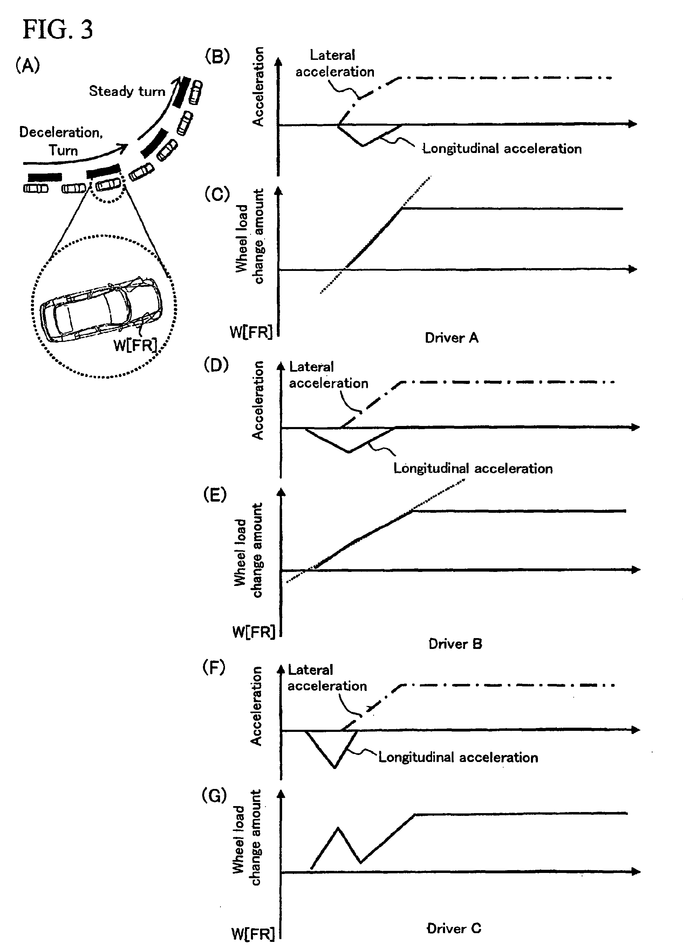

For example, when longitudinal acceleration and lateral acceleration are simultaneously varied such as when entering a curve while decelerating, as shown in FIG. 3, the wheel load change rate of a turning outside front wheel (W [FR] in FIG. 3(A)) during acceleration change desirably increases at an approximately constant rate from the start of change to a steady state as are the case of the driver A shown in FIGS. 3(B) and 3(C) and the driver B in FIGS. 3(D) and 3(E). At this point, when the timing or amount of acceleration or deceleration with respect to steering is inappropriate, the wheel load change amount does not increase at an approximately constant rate as is the case of driver C in FIGS. 3(F) and 3(G), resulting in driving in which increase and decrease of the wheel load change amount occurs repetitively.

In the present embodiment, a longitudinal acceleration indicator during turning such as when making left or right turns at a curve or intersection is derived from Equation (1) provided below.

[Expression 1]

$$G_{x\_t} = -\mathrm{sgn}(G_{y\_t}) \cdot \frac{C_{xy}}{1+Ts} J_{y\_t} + G_{x\_DC} \qquad \cdots (1)$$

where Gy_t denotes a lateral acceleration indicator, Jy_t denotes a lateral jerk indicator, Gx_DC denotes a requested acceleration, and s denotes a Laplace operator. A detailed description on Gy_t and Jy_t will be given later. In addition, Cxy denoting gain and T denoting a time constant are preset values. As for Gx_DC, acceleration necessary when turning while accelerating or decelerating at a constant rate (for example, when lowering speed or stopping while turning a curve) is inputted. In this case, Cxy may be varied in accordance with Gy_t·Jy_t, the product of Gy_t and Jy_t. For example, when traveling at an extremely low speed, Cxy is set to a significantly small value. In addition, Cxy may be set to a small value by comparing a case where Gy_t·Jy_t takes a negative value or, in other words, a case where Gx_y is to be the longitudinal acceleration indicator for increasing speed to a case where Gy_t·Jy_t takes a positive value or, in other words, a case where Gx_y is to be the longitudinal acceleration indicator for decreasing speed.

Performing turning including the longitudinal acceleration obtained by Equation (1) above results in driving in which longitudinal acceleration and lateral acceleration are simultaneously generated as is the case of driver A shown in FIGS. 3(B) and 3(C). In addition, the relationship between longitudinal acceleration and lateral acceleration in this case is known to share the same tendency as driving performed by a skilled driver.

Next, driving skill evaluation methods will be described.

In the present embodiment, driving skill evaluation is performed based on acceleration generated on the vehicle and on jerk by comparing a square mean of jerk when jerk generation equals or exceeds a given threshold with a square mean of acceleration indicator change rate created from acceleration indicators or a preset jerk evaluation indicator. Evaluation methods in the respective cases of (1) longitudinal acceleration alone, (2) lateral acceleration alone, and (3) both longitudinal and lateral acceleration as jerk generating factors will be described below.

(1) Evaluation method of jerk solely due to longitudinal acceleration

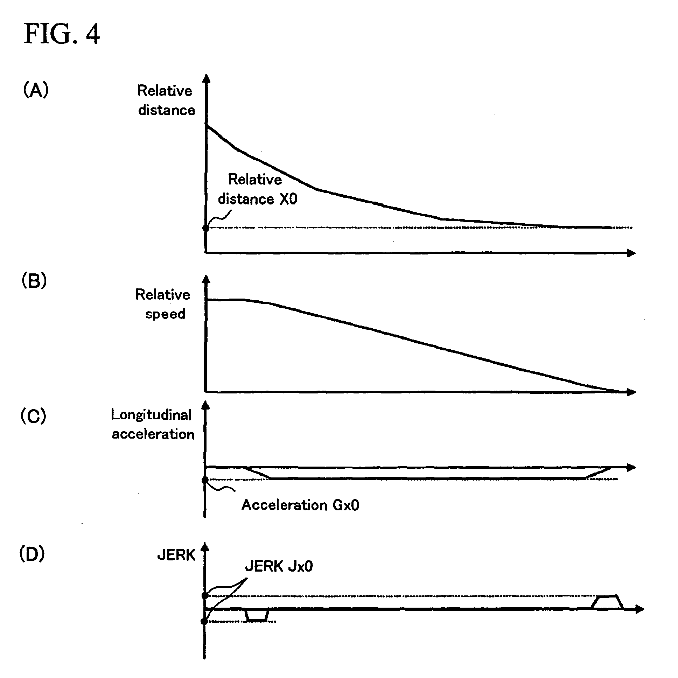

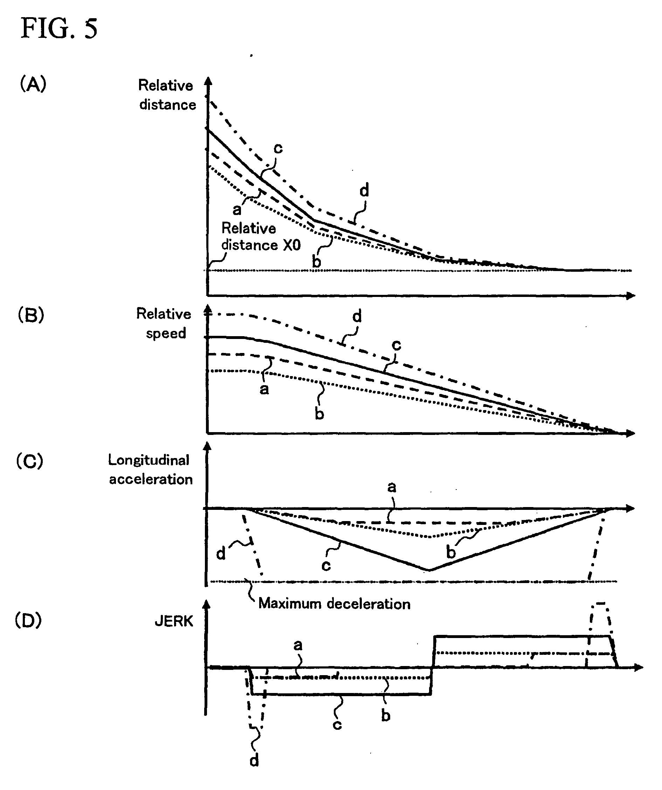

With acceleration or deceleration during straight-ahead driving or acceleration or deceleration when lateral acceleration is small, jerk occurs primarily due to changes in longitudinal acceleration. Factors for generating longitudinal acceleration at this point include factors such as an obstacle in front of the vehicle (another vehicle), signal change, and the like (hereinafter, such factors shall be referred to as longitudinal acceleration generating factors). When means for detecting a longitudinal acceleration generating factor described above, as shown in FIG. 4, a given longitudinal acceleration $Gx0$ is generated at a given jerk $Jx0$, whereby an acceleration indicator is created such that a relative speed with respect to the longitudinal acceleration generating factor takes a value of 0 when the distance to the longitudinal acceleration generating factor becomes a given value $X0$. In this case, an absolute value $|Jx0|$ of the jerk $Jx0$, an absolute value $|Gx0|$ of the longitudinal acceleration $Gx0$, and X are preset values. In addition, in the case where the relative speed cannot be set to 0 at distance $X0$ from the longitudinal acceleration generating factor at the longitudinal acceleration $Gx0$ shown in FIG. 4 (for example, when the vehicle in front decelerates suddenly, when an obstacle jumps in the travel direction of the vehicle, or the like), as shown in FIG. 5(A), the longitudinal acceleration $Gx0$ to be generated is increased while keeping $Jx0$ at the set value. Furthermore, in the case shown in FIG. 5(B) where relative speed cannot be set to 0 at $Jx0$ described above, $Jx0$ is increased as shown in FIG. 5(C). In this case, as shown in FIG. 5(D), the longitudinal acceleration to be generated ultimately becomes saturated at a maximum deceleration that can be generated on the road surface.

Driving skill evaluation is performed by comparing a square mean $Jbar\_t$ of jerk generated from the acceleration indicator obtained as described above with a square mean $Jbar\_d$ of jerk generated by operations of the driver. In other words, when driving approximates ideal driving, the difference between $Jbar\_t$ and $Jbar\_d$ becomes smaller, and during driving in which jerk is greater than during ideal driving or during driving including frequent acceleration or deceleration, $Jbar\_d$ becomes greater than $Jbar\_t$. In addition, when the longitudinal acceleration generating factor does not exist, the acceleration indicator takes a value of 0. Therefore, during driving in which acceleration or deceleration is repeated or, in other words, when vehicle speed does not become constant, $Jbar\_d$ becomes greater than $Jbar\_t$ even when the longitudinal acceleration generating factor does not exist. Furthermore, jerk $Jx0acc$ during acceleration may be set to a given value that differs from $Jx0$ in consideration of fuel efficiency during acceleration, or $Jx0acc$ may take different values between acceleration upon start of movement from a stationary state and acceleration during movement.

When means for detecting the longitudinal acceleration generating factor is not included, an acceleration indicator such as described above cannot be created. In this case, a jerk square means $Jbar\_xt0$ as an evaluation indicator is set in advance, and when acceleration or deceleration is performed by the driver, evaluation is performed by comparing $Jbar\_d$ generated by the acceleration or deceleration with $Jbar\_xt0$. In addition, when acceleration and deceleration are consecutively repeated within a predetermined period of time from the start of acceleration or deceleration, an acceleration/deceleration repetitive operation is judged and an evaluation of $Jbar\_d$ is performed using a set value $Jbar\_xt1$ that is smaller than $Jbar\_xt0$. Furthermore, when $Jbar\_d$ is greater than $Jbar\_xt0$, a judgment is made from previous $Jbar\_d$ information based on whether the $Jbar\_d$ due to the driver has a tendency of being greater than $Jbar\_xt0$ on whether or not the deceleration is due to a state where deceleration of a significant jerk was inevitable such as an abrupt deceleration of a preceding vehicle or an obstacle jumping out onto the road. As a result, when it is judged that a state had existed where abrupt deceleration was inevitable, an evaluation based on $Jbar\_xt0$ is not performed. Accordingly, even when means for detecting the longitudinal acceleration generating factor is not included, albeit at lower accuracy, it is now possible to evaluate acceleration or deceleration of the driver.

(2) Evaluation method of jerk solely due to lateral acceleration

During curve entry or lane change which does not involve acceleration or deceleration, jerk is generated primarily due to lateral jerk. For jerk due to lateral acceleration, instead of using an acceleration indicator such as that described above, a jerk square mean $Jbar\_ty0$ as an evaluation indicator is set in advance, whereby evaluation is performed by comparing $Jbar\_ty0$ with a square mean $Jbar\_d$ of jerk generated due to driving by the driver. In this case, $Jbar\_ty0$ may be set so as to take different values for curve entry and left or right turns, and lane changes. In addition, when $Jbar\_d$ during a lane change is greater than $Jbar\_ty0$, a judgment on whether or not this is due to a state where an abrupt lateral movement was inevitable in order to avoid an obstacle or the like is made from information obtained by means for detecting obstacles or the like around the vehicle in the case where such means is included, and if not included, the judgment is made based on $Jbar\_d$ information on previous lane changes. When the vehicle includes means for acquiring information on the course to be traveled, a judgment is made based on course information on whether or not lateral acceleration is due to meander, and if a meander judgment is made, $Jbar\_d$ is evaluated using a set value $Jbar\_ty1$ that is smaller than $Jbar\_ty0$. Furthermore, if course information acquiring means is not included, meander driving is judged when left-right movement is repetitively performed within a predetermined period of time from the start of lateral acceleration generation, and $Jbar\_d$ is evaluated using $Jbar\_ty1$.

(3) Evaluation method of jerk due to both longitudinal and lateral acceleration

During curve entry while or turning left or right at an intersection which involves deceleration, jerk is generated due to changes in both longitudinal acceleration and lateral acceleration. An acceleration indicator in this case is created according to Equation (1) above, and driving by the driver is evaluated by comparing jerk square mean Jbar_d computed from longitudinal acceleration and lateral acceleration actually generated due to the driving of the driver with jerk square mean Jbar_t computed from a longitudinal acceleration indicator Gx_t calculated from Equation (1) and the actually generated lateral acceleration. In this case, in Equation (1), an actually generated lateral acceleration Gy_d is used as the lateral acceleration indicator Gy_t and an actually generated lateral jerk Jy_d is used as the lateral jerk indicator Jy_t. Accordingly, it is now possible to evaluate whether the driver is executing appropriate acceleration or deceleration control during steering operations performed when negotiating curves and making turns.

Next, a computing method of jerk square means Jbar_d and Jbar_t of the driver will be described. Jbar_d and Jbar_t are respectively calculated according to Equations (2) and (3) below using an actually generated longitudinal jerk Jx_d, an actually generated lateral jerk Jy_d, and the lateral jerk indicator Jx_t computed from the longitudinal acceleration indicator Gx_t. In this case, the generated lateral jerk Jy_d is assumed to be the lateral jerk indicator Jy_t.

[Expression 2]

$$J_{bar\_d} = \int_0^t (J_{x\_d}^2 + J_{y\_d}^2)\,dt/t \qquad \cdots(2)$$

[Expression 3]

$$J_{bar\_t} = \int_0^t (J_{x\_d}^2 + J_{y\_t}^2)\,dt/t \qquad \cdots(3)$$

In addition, when computing jerk from Gx_d, Gy_d, and Gx_t, Jx_d, Jy_d, and Jx_t are respectively calculated according to Equations (4), (5), and (6) below.

[Expression 4]

$$J_{x\_d} = \frac{dG_{x\_d}}{dt} \qquad \cdots(4)$$

[Expression 5]

$$J_{y\_d} = \frac{dG_{y\_d}}{dt} \qquad \cdots(5)$$

[Expression 6]

$$J_{x\_t} = \frac{dG_{x\_t}}{dt} \qquad \cdots(6)$$

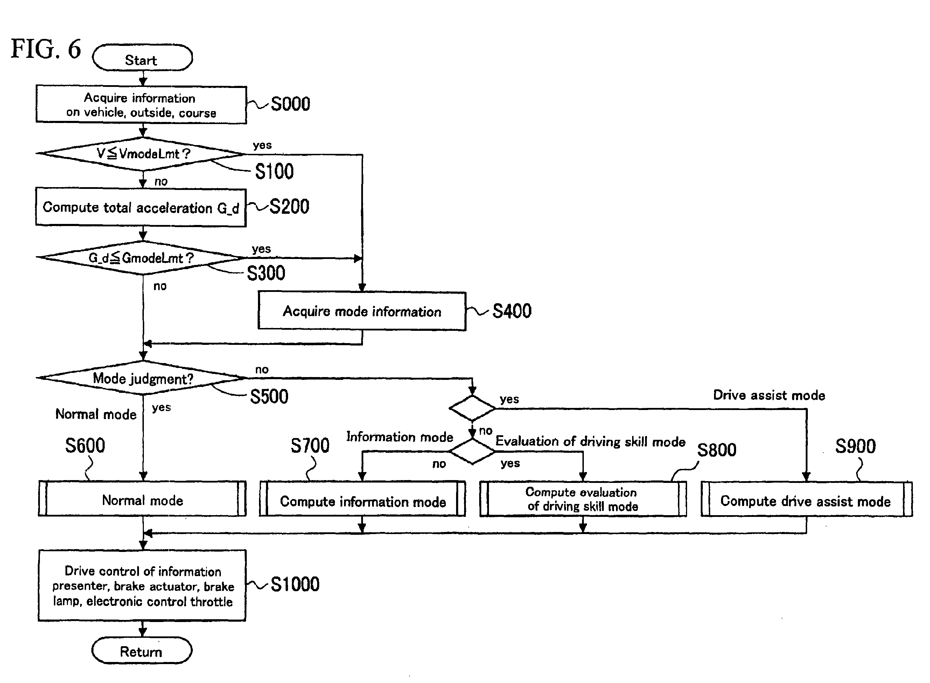

Next, control contents according to the first embodiment will be described with reference to FIGS. 6 to 23.
First, overall operations of the driving skill improvement device according to the present embodiment will be described with reference to FIG. 6.
FIG. 6 is a flowchart showing processing operations of the driving skill improvement device (the control unit 10) according to the first embodiment.

In step S000, vehicle information, outside information, and course information are acquired. As vehicle information, a vehicle speed V, a longitudinal acceleration Gx_d, a lateral acceleration Gy_d, a steering angle δ and a master cylinder pressure Pm are acquired. In this case, a yaw rate r, a brake pedal stroke amount, a gear position, and the like may be arranged to be acquired in addition to the vehicle speed V, the longitudinal acceleration Gx_d, the lateral acceleration Gy_d, the steering angle δ, the master cylinder pressure Pm, and the accelerator pedal stroke amount.

In addition, as outside information, information is acquired on: an obstacle existing around the vehicle, relative distance, speed, and acceleration of the obstacle with respect to the vehicle, the width of the obstacle; course configuration, road surface state, lane width in the direction of travel of the vehicle; traffic signal information along the route of the vehicle, and the like.

After information is acquired, the flow proceeds to step S100.

In step S100, a judgment is made on whether or not the vehicle speed is equal to or lower than a speed threshold VmodeLmt. In this case, VmodeLmt is a value set in advance. When the vehicle speed V is equal to or lower than VmodeLmt, the flow proceeds to step S400, while if larger than VmodeLmt, the flow proceeds to step S200.

In step S200, a total acceleration G_d generated on the vehicle is computed. G_d is calculated from longitudinal acceleration Gx_d and lateral acceleration Gy_d according to Equation (7) below. After computation is performed, the flow proceeds to step S300.

[Expression 7]

$$G_{\_d} = G_{x\_d}{}^{2} + G_{y\_d}{}^{2} \qquad \cdots (7)$$

In step S300, a judgment is made on whether or not the total acceleration G_d is equal to or smaller than a total acceleration threshold GmodeLmt. In this case, VmodeLmt is a value set in advance. When total acceleration G_d is equal to or lower than GmodeLmt, the flow proceeds to step S400, and when greater than GmodeLmt, the flow proceeds to step S500.

In step S400, mode information detection is performed. After mode information is detected, the flow proceeds to step S500.

In steps S100 to S400, a judgment on whether or not to perform a mode change is based on the vehicle speed V and the total acceleration G_d. In other words, in a situation where the vehicle is moving at a higher speed than the speed threshold VmodeLmt and a greater acceleration than the total acceleration threshold GmodeLmt is being generated, the attention of the driver is prevented from becoming distracted by prohibiting mode changes. In this case, when allowing mode changes only when the vehicle is stationary, setting the speed threshold VmodeLmt to 0 shall suffice. In addition, by setting the speed threshold VmodeLmt to a certain speed, mode changes may be enabled even when the vehicle is moving as long as the movement is a constant speed movement in which acceleration is not generated. Moreover, mode change judgment need not be limited to the method described in steps S100 to S400, and the judgment may alternatively be arranged to be performed by interrupt processing only when a mode change is requested.

In step S500, a mode judgment is performed based on the obtained mode information (a judgment of whether or not the mode is the normal mode is made, followed by, in sequence, a judgment of whether or not the mode is the drive assist mode, and a judgment of whether or not the mode is the evaluation of driving skill mode). When it is judged in step S500 that the mode is the normal mode, the flow proceeds to step S600; in the case of the information mode, to step S700; in the case of the evaluation of driving skill mode, to step S800; and in the case of the drive assist mode, to step S900.

In step S600, control instructions in the normal mode to the information presenter 4, the brake actuator 6, the brake lamp 7, and the electronic control throttle 8 are computed. In the normal mode, information presentation, driving assist, and the like are not performed with respect to the driver. Therefore, a control instruction to the information presenter 4 that causes the information presenter 4 to display that the mode is the normal mode is computed. In this case, methods of notifying that the mode is the normal mode may include displaying "Normal" on the information presenter, displaying nothing to indicate the normal mode, and the like. In addition, control instructions to the brake actuator, the brake lamp, and the electronic control throttle are not computed. After various control instructions are computed, the flow proceeds to step S1000.

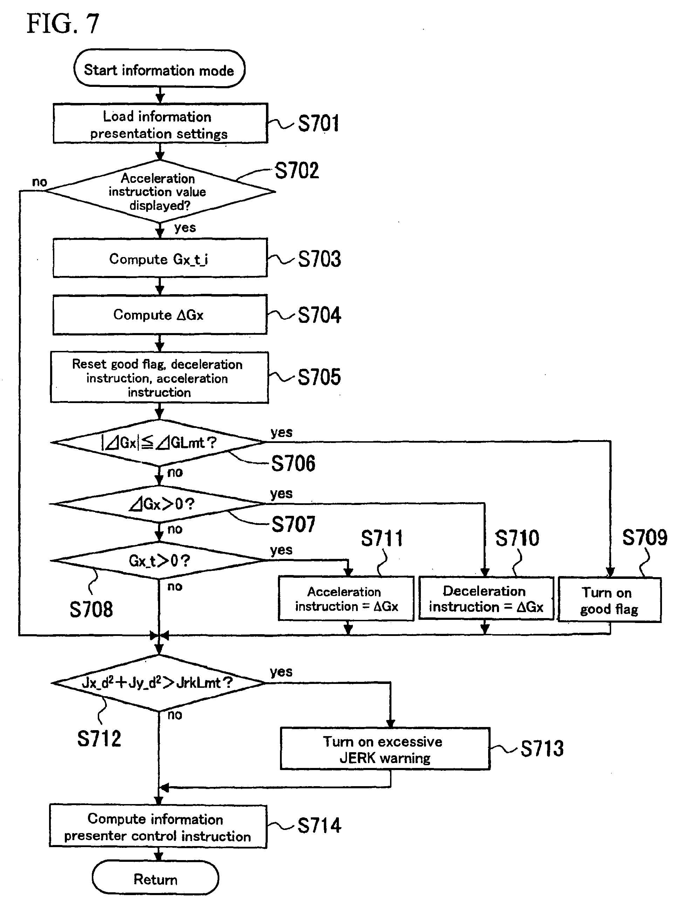

In step S700, control instructions in the information mode to the information presenter 4, the brake actuator 6, the brake lamp 7, and the electronic control throttle 8 are computed. In the information mode, a control instruction to the information presenter for presenting information such as vehicle information, outside information, an acceleration instruction value, and the like, is computed. A control flowchart of the information mode is shown in FIG. 7.

In the present embodiment, information to be presented in the information mode may be arranged so as to be selected and set by the driver. Accordingly, the driver is able to select information to be presented according to the state or the mood of the driver. In step S701, a setting representing what kind of information the driver has set to be presented is read. In addition, when no selection or setting has been made by the driver, default information presentation settings are loaded. After the information presentation setting is loaded, the flow proceeds to step S702.

In step S702, a judgment is made on whether or not a display of an acceleration instruction value exists in the information presentation settings for which display was requested. If an acceleration instruction value display exists, the flow proceeds to step S703, and if not, the flow proceeds to S711.

In step S703, a target longitudinal acceleration Gx_t_i for information presentation is computed. In this case, if lateral acceleration is not involved, Gx_t is computed based on |Jx0|, |Gx0|, and X0 set in advance as shown in FIG. 5 described above. If |Jx0| and |Gx0| are incapable of providing sufficient deceleration, Gx_t_i is computed by retaining the value of |Jx0| but increasing |Gx0| as shown in FIG. 5(B), and if deceleration is still insufficient, Gx_t_i is computed by increasing |Jx0| as shown in FIGS. 5(C) and 5(D).

When lateral acceleration is involved, Equation (1) provided above is used to compute Gx_t_i by setting the target lateral acceleration Gy_t to the generated lateral acceleration Gy_d and setting the target lateral jerk Jy_t to the generated lateral jerk Jy_d. In this case, when a heavy filter is required to remove noise from Gy_d and Jy_d, the respective values will delay significantly from their respective true values. Since Gx_t_i is an acceleration indicator to be presented to the driver and there is also the fact that a delay occurs between the time where the information is received by the driver and the time where an operation is performed by the driver, Gx_t_i is desirably a value including minimum delay. In this case, Gx_t_i may be calculated according to Equation (8) below using the steering angle δ and an angular velocity of steering dδ.

[Expression 8]

$$G_{x\_t\_i} = -\mathrm{sgn}(\delta) \cdot \frac{C_{x\delta}}{1 + T_\delta s} d\delta + G_{x\_DC} \qquad \cdots(8)$$

where Cxδ denotes gain and is a value given in advance so as to vary according to vehicle speed V. In addition, Tδ denotes a time constant and is a preset value. Furthermore, yaw rate information generally contains less noise than acceleration information, and often requires lighter filter processing in comparison to acceleration. When such a yaw rate r and a yaw rate change rate dr can be acquired, Gx_t_i may be calculated according to Equation 9 below using r and dr.

[Expression 9]

$$G_{x\_t\_i} = -\mathrm{sgn}(r) \cdot \frac{C_{xr}}{1 + T_r s} dr + G_{x\_DC} \qquad \cdots(9)$$

where Cxr denotes gain and is a value given in advance so as to vary according to vehicle speed V. In addition, Tr denotes a time constant and is a preset value.

In addition, when computing the target longitudinal acceleration Gx_t_i for information presentation according to Equations (1), (8), and (9) and presenting braking and accelerator timings to the driver, the primary delay of the portion used to compute Gx_t_i may be adjusted so as to display the timings in advance to compensate for the response delay by the driver.

After Gx_t_i is computed, the flow proceeds to step S704.

In step S704, a difference between Gx_t_i and Gx_d is computed according to Equation (10) below. After computation is performed, the flow proceeds to step S705.

[Expression 10]

$$\Delta G_x = G_{x\_d} - G_{x\_t\_i} \qquad \cdots(10)$$

At this point, when Gx_t_i has taken a value that is in advance of the true value such as the case where Gx_t_i is calculated according to Equation (8) above, ΔGx may be computed using Gx_t_i exactly corresponding to the advanced period of time.

In step S705, a "GOOD flag" indicating that the driving state is good, a deceleration instruction that is an instruction value when deceleration is insufficient, and an acceleration instruction that is an instruction value when acceleration is insufficient are reset. After reset, the flow proceeds to step S706.

In step S706, an absolute value |ΔGx| of ΔGx is compared with an acceleration difference threshold ΔGLmt. When |ΔGx| is equal to or smaller than ΔGLmt, the difference from the target is judged to be small and the flow proceeds to step S709. When |Gx| is greater than AGLmt, the flow proceeds to step S707.

In step S709, based on the judgment to the effect that the absolute value |ΔGx| of the difference between Gx_t_i and Gx_d is small, a "GOOD flag" indicating a good driving state is raised and the flow proceeds to step S712.

In step S707, a judgment is made on whether ΔGx is positive or negative. When positive, the flow proceeds to step S710, and when negative, the flow proceeds to step S708.

In step S710, based on the judgment to the effect that ΔGx is positive and that deceleration is insufficient, ΔGx is assumed to be the deceleration instruction and the flow proceeds to step S712.

In step S708, a judgment is made on whether Gx_t is positive or negative. When positive, the flow proceeds to step S711, and when negative, the flow proceeds to step S712.

In step S711, since Gx_t is positive or, in other words, an acceleration instruction has been issued and, in addition thereto, Gx is negative, acceleration is judged to be insufficient. Therefore, ΔGx is assumed to be the acceleration instruction and the flow proceeds to step S712.

In step S712, a judgment is made on whether or not a sum of squares of the generated longitudinal jerk Jx_d and the lateral jerk Jy_d is greater than a jerk upper limit JrkLmt, and if so, the flow proceeds to step S713. Otherwise, the flow proceeds to S714.

In step S713, the generated jerk is judged to be excessively large, an excessive jerk warning is switched on, and the flow proceeds to step S714.

In step S714, an information presenter control instruction is computed based on the vehicle information, the outside information, the GOOD flag, the deceleration instruction, the acceleration instruction, and the jerk excessive warning.

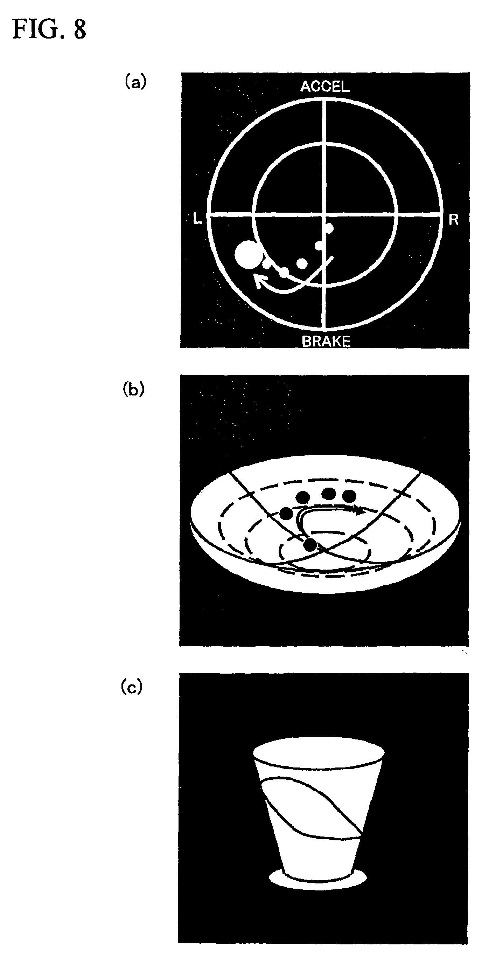

As a method of presenting vehicle information using the information presenter 4, for example, as shown in FIG. 8(a), a display may be performed in which an object moves on a G-G diagram on an information display in accordance with variances in longitudinal and lateral acceleration. At this point, as shown in FIG. 8(a), display may be performed so that the movement locus of the moving object remains displayed over a given period of time or displayed by a given number of dots. In addition, as shown in FIG. 8(b), display may be performed so that a sphere moves within a curved surface in accordance with variances in longitudinal and lateral acceleration. Furthermore, as shown in FIG. 8(c), a glass holding liquid may be displayed, whereby the liquid held by the glass moves in accordance with variances in longitudinal and lateral acceleration. At this point, when an excessive jerk is generated, the liquid in the glass may be arranged to spill over. Moreover, the size of the circle of the G-G diagram shown in FIG. 8(a) or the curved plane shown in FIG. 8(b) or the amount of liquid shown in FIG. 8(c) may be varied in accordance with the magnitude of acceleration that the driver allows to be generated. For example, when acceleration allowed by the driver is assumed to be 3 m/s$^2$, the liquid shown in FIG. 8 (c) is set to an amount that cannot be completely spilled even when an acceleration of 3 m/s$^2$ is applied, and when acceleration allowed by the driver is assumed to be 5 m/s$^2$ the liquid is reduced in comparison to a case where the allowable acceleration is 3 m/s$^2$ and is set to an amount that cannot be completely spilled even when an acceleration of 5 m/s$^2$ is applied.

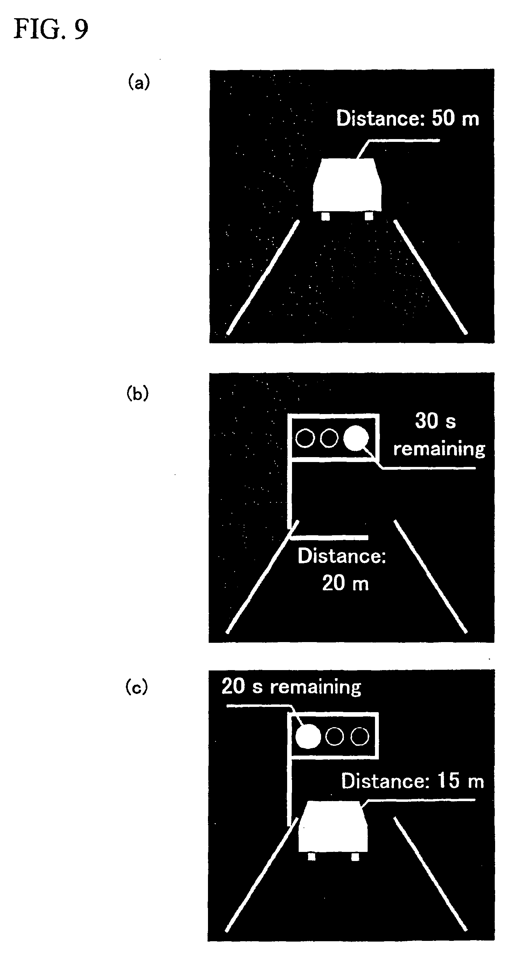

As a method of presenting outside information, for example, as shown in FIG. 9(a), a method may be used in which a distance between the vehicle and an obstacle (such as another vehicle) in the direction of movement of the vehicle is displayed on the information display. In addition, as shown in FIG. 9(b), a method may be used in which an illumination status (red, yellow, or green) of a traffic light in the direction of movement of the vehicle and a remaining illumination time with respect to the illumination status are displayed. In this case, when there are no obstacles in the direction of movement of the vehicle, the distance between the vehicle and a halt line may be displayed concurrently. Furthermore, as shown in FIG. 9(c), when both an obstacle and a traffic light exist in front of the vehicle, the remaining illumination time of the traffic light and the distance to the obstacle may be displayed simultaneously.

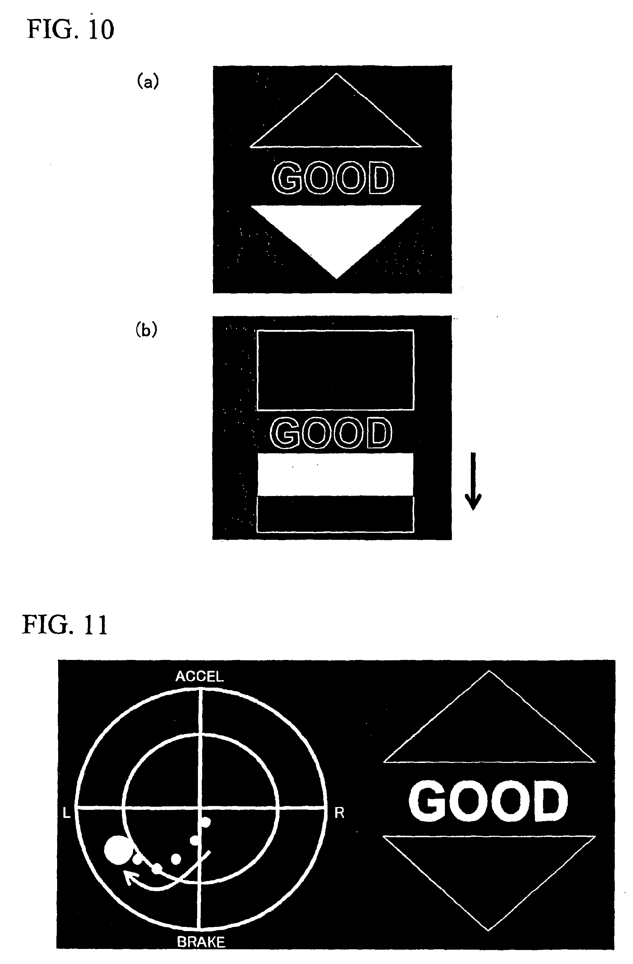

As for a method of presenting an acceleration instruction value, for example, as shown in FIG. 10(a), a method may be used in which a triangle pointing upwards, a triangle pointing downwards, and the letters "GOOD" are arranged to be displayed on the information display, whereby the upward triangle is lighted in response to an acceleration instruction, the downward triangle is displayed in response to a deceleration instruction, and the letters "GOOD" are displayed in response to a "GOOD flag" (FIG. 10(a) shows a state where the downward triangle is lighted due to a deceleration instruction). In this case, the illumination colors of the upward triangle, the downward triangle, and the letters "GOOD" may be arranged so as to be respectively different. In addition, the blinking rate of the respective triangles to be lighted may be varied in accordance with the magnitude of the acceleration instruction or the deceleration instruction. Furthermore, the color of the triangle to be lighted may be arranged to vary from a light color to a dark color in accordance with the magnitude of the acceleration instruction or the deceleration instruction. Moreover, as shown in FIG. 10(b), a method may be used in which the letters "GOOD" and a bar that extends and retracts upward and downward are displayed on the information display, whereby the bar is extended upward in response to an acceleration instruction, the bar is extended downward in response to a deceleration instruction, and the letters "GOOD" are illuminated in response to a "GOOD flag" (FIG. 10(b) shows a state where the bar is extended downward due to a deceleration instruction). In addition, the rate at which the bar is extended or retracted may be varied in accordance with the magnitude of the acceleration instruction or the deceleration instruction.

Furthermore, as a method of presenting an acceleration instruction value, in addition to the information display described above, information presentation may be performed using a sound generator via beep sounds or speech in accordance with an acceleration instruction, a deceleration instruction, and a "GOOD flag". Moreover, information presentation may be performed using a vibration generator by causing the brake pedal, the accelerator pedal, the steering wheel or the like to vibrate. In addition, information presentation may be performed by varying the reaction force of the brake pedal or the accelerator pedal to an operation by the driver.

Furthermore, when a jerk excessive warning is turned on, the excessive jerk is notified to the driver by varying the background color of the information display, displaying a warning to the effect that the jerk is excessive, and the like. In this case, an alarm sound notifying that jerk is excessive may be generated by a sound generator.

Moreover, as a display method using the information display, as shown in FIG. 11, the plurality of types of display information displayed above may be displayed simultaneously.

As described above, in the information mode, a control instruction to the information presenter for presenting information such as vehicle information, outside information, an acceleration instruction value, and the like to the driver, is computed. In addition, control instructions to the brake actuator, the brake lamp, and the electronic control throttle are not issued.

After computing the control instruction to the information display, the flow proceeds to step S1000.

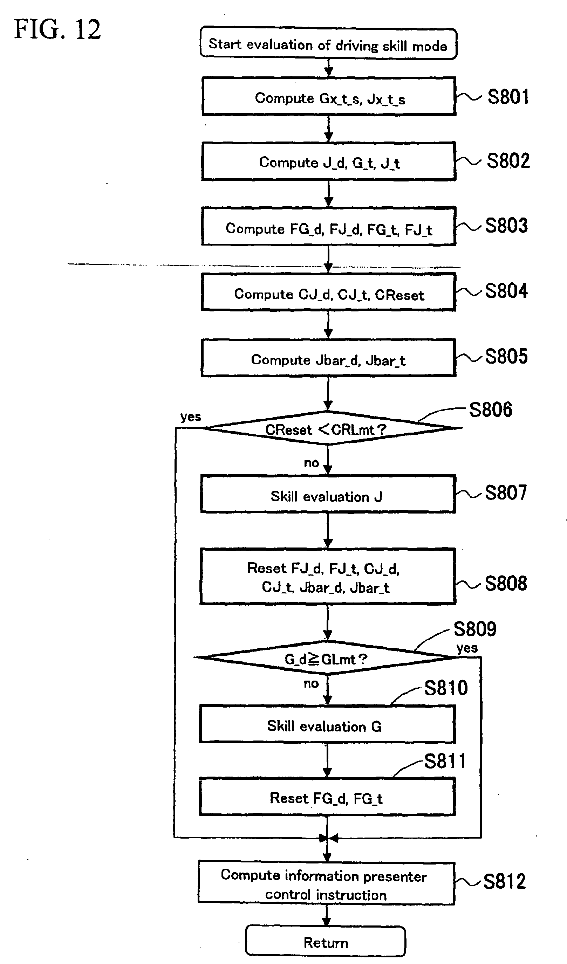

In step S800, control instructions in the evaluation of driving skill mode to the information presenter 4, the brake actuator 6, the brake lamp 7, and the electronic control throttle 8 are computed. In the evaluation of driving skill mode, a control instruction to the information presenter for presenting vehicle information and outside information to the driver is computed. A control flowchart of the evaluation of driving skill mode is shown in FIG. 12.

In step S801, a longitudinal acceleration instruction value Gx_t_s and a longitudinal jerk instruction value Jx_t_s for the evaluation of driving skill mode are computed. When no lateral acceleration is being generated, Gx_t_s is computed in the same manner as in the information mode described above. In addition, Jx_t_s is assumed to be Jx0. When lateral acceleration is being generated, computation is performed according to Equation (1) above by using the generated lateral acceleration Gy_d as Gy_t and the generated lateral jerk Jy_d as Jy_t. In addition, a value obtained by differentiating Gx_t_s is to be used as Jx_t_s. After computation is performed, the flow proceeds to step S802.

In step S802, computation is performed on a generated jerk sum J_d, an acceleration indicator sum G_t, and a jerk indicator sum J_t. The generated jerk sum J_d, the acceleration indicator sum G_t, and the jerk indicator sum J_t are respectively calculated according to Equations (11) to (13) below. After computation is performed, the flow proceeds to step S803.

[Expression 11]

$$J_{\_d} = J_{x\_d}{}^2 + J_{y\_d}{}^2 \qquad \cdots (11)$$

[Expression 12]

$$G_{\_t} = G_{x\_t}{}^2 + G_{y\_t}{}^2 \qquad \cdots (12)$$

[Expression 13]

$$J_{\_t} = J_{x\_t}{}^2 + J_{y\_t}{}^2 \qquad \cdots (13)$$

In step S803, acceleration flags FG_d and FG_t and jerk flags FJ_d and FJ_t are computed. The acceleration flags are respectively set to 1 if G_d and G_t calculated in step S200 are respectively equal to or greater than a given set threshold GLmt. In addition, the jerk flags are respectively set to I if j_d and j_t are respectively equal to or greater than a given set threshold JLmt. In this case, reset of the acceleration flags FG_d and FG_t and jerk flags FJ_d and FJ_t is performed according to a reset instruction. If no reset instruction is issued, the acceleration flags are to remain at 1 even when, for example, acceleration drops below the threshold. After the acceleration flags FG_d and FG_t and jerk flags FJ_d and FJ_t are computed, the flow proceeds to step S804.

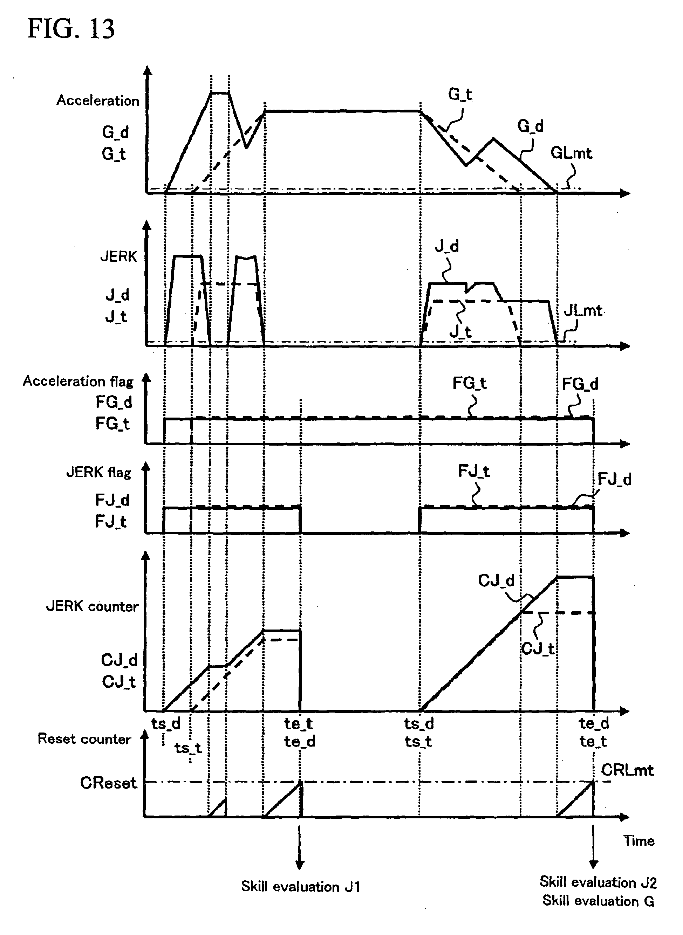

In step S804, a jerk counter CJ_d according to the jerk of the driver, CJ_t according to the jerk indicator, and a reset counter CReset are computed. The jerk counter is a counter for counting the time during which jerk is equal to or greater than the threshold JLmt, while the reset counter CReset is a counter for counting the time during which the jerk flag takes a value of 1 and jerk is smaller than the threshold JLmt. As shown in FIG. 13, the CJ_d counter is increased when J_d is equal to or greater than JLmt, and when J_d is smaller than JLmt, the increase of the counter is suspended. Similarly, the CJ_t counter is increased when J_t is equal to or greater than JLmt, and when J_t is smaller than JLmt, the increase of the counter is suspended. In addition, the CReset counter is increases when FJ_d is 1 and J_d is smaller than the threshold JLmt, and is reset when J_d is equal to or greater than the threshold JLmt. After CJ_d, CJ and CReset are computed, the flow proceeds to step S805.

In step S805, a square mean Jbar_d of the jerk generated by the driving of the driver and a square mean Jbar_t of the jerk instruction value are computed. As indicated by Equation (14) below, Jbar_d is a value calculated by dividing, by CJ_d, an integration value of J_d from a time point ts_d where FJ_d changes from 0 to 1 to a time point te_d where FJ_d changes from 1 to 0. In addition, as indicated by Equation (15) below, Jbar_t is a value calculated by dividing, by CJ_t, an integration value of J_t from a time point ts_t where FJ_t changes from 0 to 1 to a time point te_t where FJ_t changes from 1 to 0. At this point, if J_d is smaller than the threshold JLmt, integration may be performed by setting J_d to 0. Accordingly, an increase in the integration value when J_d varies at a smaller value than the threshold JLmt can be prevented. In a similar manner, if J_t is smaller than the threshold JLmt, integration may be performed by setting J_t to 0. Furthermore, when an acceleration indicator or a jerk indicator is not computed as is the case in (2) evaluation method of jerk solely due to lateral acceleration or the case in (1) which means for detecting the longitudinal acceleration generation factor in the evaluation method of jerk solely due to longitudinal acceleration, values Jbar_x0, Jbar_tx1, Jbar_y0, and Jbar_ty1 set in advance is used as Jbar_t in accordance with the state of movement as described above. After computing Jbar_d and Jbar_t, the flow proceeds to step S806.

[Expression 14]

$$ J_{bar\_d} = \int_{ts\_d}^{te\_d} J_{\_d} \, dt / CJ_{\_d} $$

$$\cdots(14)$$

[Expression 15]

$$ J_{bar\_t} = \int_{ts\_t}^{te\_t} J_{\_t} \, dt / CJ_{\_t} $$

$$\cdots(15)$$

In step S806, CReset is compared with a preset reset threshold CRLmt. If CReset is smaller than CRLmt, the flow proceeds to step S812. Otherwise, the flow proceeds to S807.

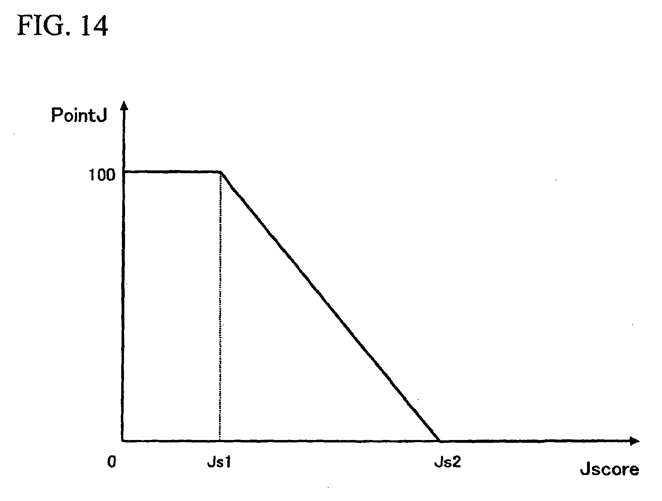

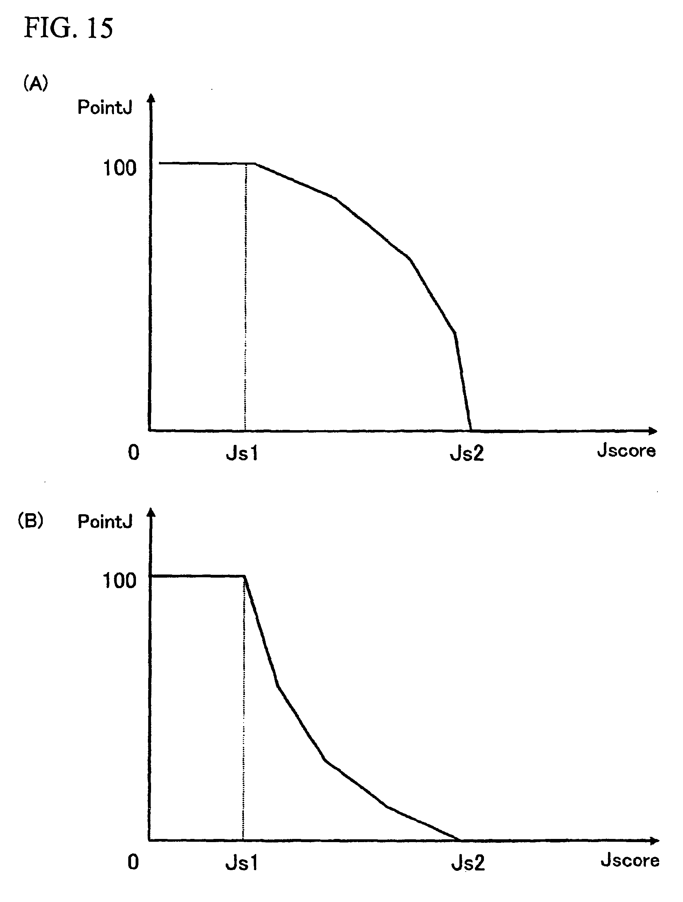

In step S807, a skill judgment after the conclusion of movement involving acceleration change is performed as skill judgment J. As for a skill judgment method, Jbar_d and Jbar_t is compared to judge the driving skill of the driver. In this judgment method, the greater Jbar_d is in comparison to Jbar_t, the worse the evaluation. Conversely, when Jbar_d equals or falls below Jbar_t, the better the evaluation. For example, a value obtained by dividing Jbar_d with Jbaj_t is assumed to be an evaluation indicator Jscore, whereby an evaluation point PointJ is computed in accordance with the magnitude of the value of Jscore using a map such as that shown in FIG. 14. In this case, Js1 and Jx2 are values set in advance. At this point, in regards to the relationship between Jscore and PointJ, the segment between Js1 and Js2 may be arranged so as to be nonlinear as shown in FIGS. 15(A) and 15(B). Accordingly, the sensitivity of PointJ with respect to Jscore can be varied such as the higher the point, the slower the rate at which points are increased, or conversely, reducing the rate at which points increase up to a certain point. In addition, the range of PointJ need not be limited to 0 to 100, and may alternatively be set to 0 to 10 or 1 to 5. After PointJ is computed, the flow proceeds to step S808.

In step S808, reset processing of FJ_d, FJ_t, CJ_d, CJ_t, Jbar_d, and Jbar_t is performed. After reset, the flow proceeds to step S809.

In step S809, G_d is compared with the preset threshold GLmt. If G_d is smaller than the threshold GLmt, the acceleration generated by the driving of the driver is judged to be small and the flow proceeds to S810. Otherwise, the flow proceeds to S812.

In step S810, a skill judgment after the conclusion of movement involving acceleration is performed as skill judgment G. As for a skill judgment method, an evaluation of the driving skill of the driver is performed based on an average value of PointJ judged by the skill judgment J when FG_d takes a value of 1. For example, in the example shown in FIG. 13, the average of Point J1 obtained by skill judgment J1 and Point J2 obtained by skill judgment J2 is computed as PointG. After computation is performed, the flow proceeds to step S811.

In step S811, reset processing for FG_d and FG_t is performed. After reset, the flow proceeds to step S812.

In step S812, a control instruction of the information display is computed based on the judgment results of skill judgment J and skill judgment G.

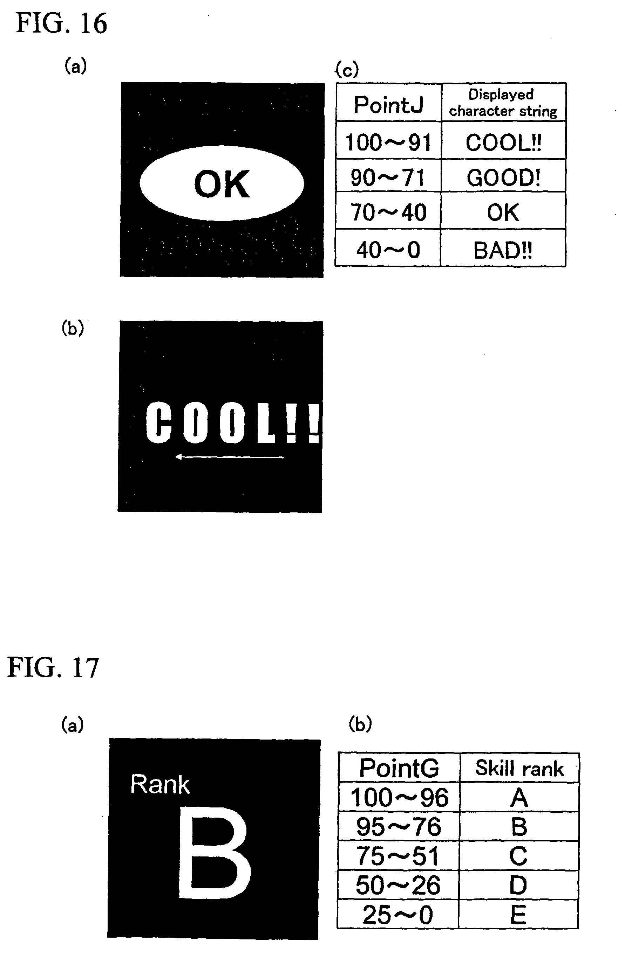

As for the presentation method of the judgment result of skill judgment J, display in accordance with PointJ is performed on the information display for a predetermined period of time. For example, as shown in FIG. 16, character strings to be displayed in accordance with PointJ are arranged to be determined, whereby when PointJ is 50, a character string of "OK" is displayed as shown in FIG. 16(a). In addition, as a display method, as shown in FIG. 16(b), a method may be used in which a character string is displayed so as to traverse the screen. Furthermore, the display method may be varied according to the character string. As the information to be displayed on the information display at this point, PointJ itself may be displayed instead of character strings in accordance with PointJ. Moreover, as a judgment result presentation method, judgment results may be presented by audio using a sound generator. For example, the character strings shown in FIG. 16(c) may be conveyed to the driver via audio.

As for the presentation method of the judgment result of skill judgment G, display in accordance with PointG is performed on the information display for a predetermined period of time. For example, as shown in FIG. 17(b), skill ranks may be determined according to PointG, whereby character strings corresponding to skill ranks are to be displayed. For example, if PointG is 80, a character string of "Rank B" may be displayed as shown in FIG. 17(a). The division of ranks with respect to PointG need not be limited to the method shown in FIG. 17(b). For example, instead of using a method in which ranks are divided as described above, PointG may be directly displayed as an evaluation point. Moreover, as a judgment result presentation method, judgment results may be presented using a sound generator. For example, the ranks shown in FIG. 17(b) may be conveyed to the driver via sounds or voices corresponding to the ranks.

In this case, when judgment results are obtained simultaneously as is the case of, for example, skill judgment J2 and skill judgment G shown in FIG. 13, a control instruction of the information display is computed so that the judgment result according to skill judgment G is presented after the judgment result according to skill judgment J is presented.

As described above, in the evaluation of driving skill mode, a control instruction to the information presenter for presenting information the driver with a driving skill evaluation result is computed. In addition, control instructions to the brake actuator, 6, the brake lamp 7, and the electronic control throttle 8 are not issued.

After computing the control instruction to the information display, the flow proceeds to step S1000.

In step S900, control instructions in the drive assist mode to the information presenter 4, the brake actuator 6, the brake lamp 7, and the electronic control throttle 8 are computed. In the drive assist mode, a control instruction for correcting the operation amounts of the accelerator and brake by the driver is computed based on vehicle information and outside information.

In the drive assist mode, a driver operation amount is assisted so as to reduce insufficient brake operation amount by the driver during deceleration, to reduce abrupt changes in acceleration when reducing the brake operation amount (during brake pedal release), and to reduce abrupt changes in acceleration when stepping on the accelerator pedal.

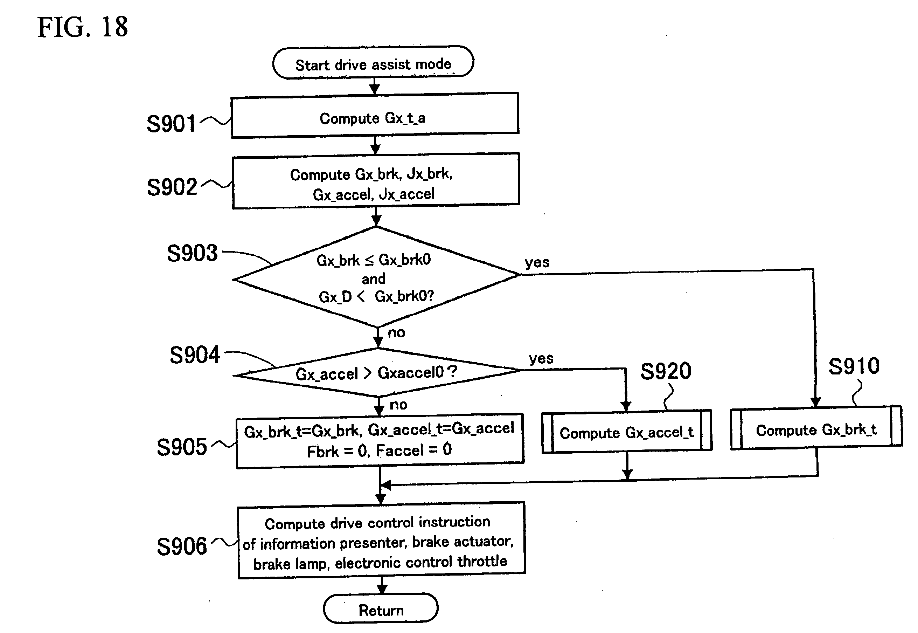

A control flowchart of the drive assist mode is shown in FIG. 18.

In step S901, an acceleration indicator Gx_t_a for the drive assist mode is computed. Since the computation method of Gx_t_a is the same as the computation method of Gx_t_i described above, a description thereof shall be omitted. After computation is performed, the flow proceeds to step S902.

In step S902, an acceleration Gx_brk and a jerk Jx_brk which are generated due to a brake operation by the driver and an acceleration Gx_accel and a jerk Jx_accel which are generated due to an accelerator operation are computed. Gx_brk is computed from the relationship between the master cylinder pressure Pm and the generated acceleration. As a computation method, for example, a map of generated acceleration with respect to the master cylinder pressure Pm is prepared in advance, whereby computation is performed using the map. In addition, Gx_brk may be given as a function of the master cylinder pressure Pm. Furthermore, using course information, Gx_brk may be computed from the master cylinder pressure Pm using the map or the function described above by taking a road surface friction coefficient or a road surface gradient into consideration. Accordingly, Gx_brk can be estimated with high accuracy. In addition, a computation method of jerk Jx_brk may involve differentiating Gx_brk or computing by providing a relationship between a change rate of the master cylinder pressure Pm and jerk Jx_brk. In this case, Jx_brk may be computed from a change rate of the master cylinder pressure Pm using the map or the function described above by taking a road surface friction coefficient or a road surface gradient into consideration. Moreover, instead of using the master cylinder pressure Pm, the relationship between the brake pedal stroke amount and Gx_brk may be provided as a function or a map to compute Gx_brk.

Gx_accel is computed from the relationship between the accelerator pedal stroke amount and the generated acceleration. As a computation method, for example, a map of generated acceleration with respect to the accelerator pedal stroke amount is prepared in advance, whereby computation is performed using the map. In addition, Gx_accel may be given as a function of the accelerator pedal stroke amount. Furthermore, using course information, Gx_accel may be computed from the accelerator pedal stroke amount using the map or the function described above by taking a road surface friction coefficient or a road surface gradient into consideration. Accordingly, Gx_accel can be estimated with high accuracy. In addition, a computation method of jerk Jx_accel may involve differentiating Gx_accel or computing by providing a relationship between a change rate of the accelerator pedal stroke amount and jerk Jx_accel. In this case, Jx_accel may be computed from a change rate of the accelerator pedal stroke amount using the map or the function described above by taking a road surface friction coefficient or a road surface gradient into consideration. After computation is performed, the flow proceeds to step S903.

In step S903, a judgment is made on whether or not a deceleration due to a brake operation by the driver is taking place. As for a judgment method, a deceleration due to a brake operation by the driver is judged to be taking place when Gx_brk is equal to or lower than a judgment threshold Gxbrk0 and the generated acceleration Gx_d is smaller than Gxbrk0, and the flow proceeds to step S910. Otherwise, the flow proceeds to step S904. In this case, Gxbrk0 is an acceleration that is generated on the vehicle when no brake operations or accelerator operations are being performed. Gxbrk0 is a value calculated from the vehicle speed V, a shift position, a road surface friction coefficient, and a road surface gradient.

In step S904, a judgment is made on whether or not an acceleration due to an accelerator operation by the driver is taking place. As for a judgment method, acceleration due to an accelerator operation by the driver is judged to be taking place when Gx_accel is equal to or greater than a judgment threshold Gxaccel0, and the flow proceeds to step S920. Otherwise, the flow proceeds to step S905. In this case, the judgment threshold Gxaccel0 may be set to the same value as Gxbrk0. In addition, a value calculated by adding a given offset to Gxbrk0 may be used as the value Gxaccel0, whereby acceleration due to an accelerator operation by the driver is judged to be taking place when an accelerator operation greater than a certain fixed amount.

In step S905, a judgment is made to the effect that an acceleration or deceleration is not taking place and that driving assistance is unnecessary. An acceleration indicator Gx_brk_t generated by the brake is set to Gx_brk while an acceleration indicator Gx_accel_t generated by the accelerator is set to Gx_accel. In addition, a brake assistance control flag Fbrk and an accelerator assistance control flag Faccel are both set to 0. After computation is performed, the flow proceeds to step S906.

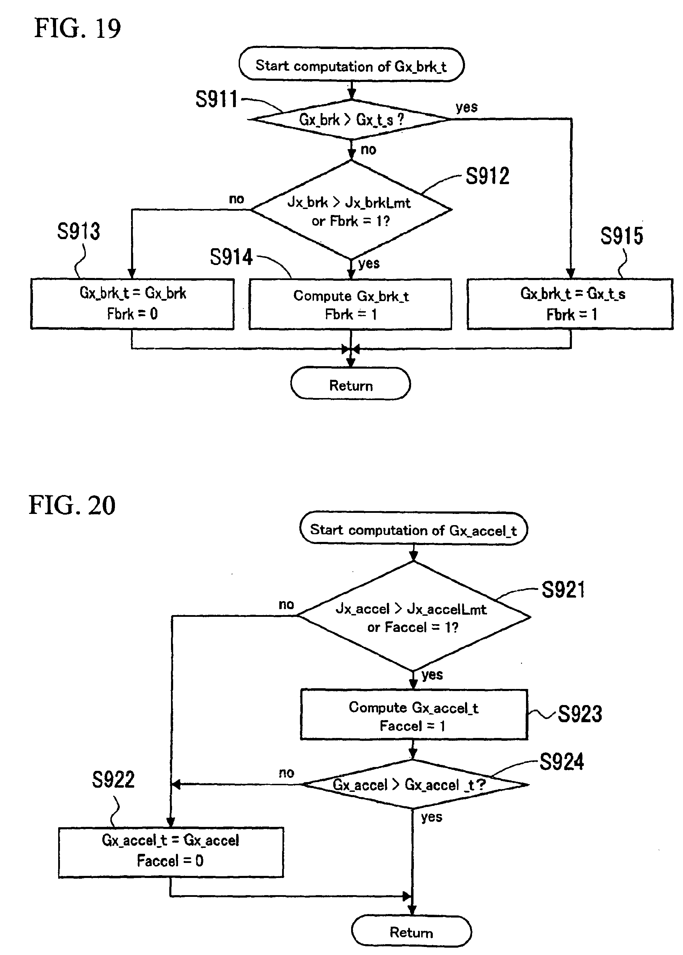

In step S910, an acceleration indicator Gx_brk_t for brake operation assistance during deceleration is computed. A computation flowchart of Gx_brk_t is shown in FIG. 19.

In step S911, Gx_t_s and Gx_brk are compared, whereby when Gx_t_s is greater than Gx_brk, a judgment is made to the effect that the brake operation by the driver requires deceleration assistance and the flow proceeds to S915. Otherwise, the flow proceeds to step S912.

In step S912, a judgment is made on whether a jerk Jx_brk generated due to a brake operation by the driver is greater than a given threshold JxbrkLmt or whether a brake assistance control flag Fbrk is 1. In this case, JxbrkLmt is a tolerance of jerk accompanying pedal brake release and is a value set in advance. When Jx_brk is greater than JxbrkLmt, a judgment is made to the effect that the jerk due to brake pedal release is excessive and that deceleration assistance is necessary, and the flow proceeds to step S914. In addition, when the brake assistance control flag Fbrk is 1, a judgment is made to the effect that brake assistance control is taking place and the flow proceeds to step S914. Otherwise, a judgment to the effect that deceleration assistance is unnecessary is made and the flow proceeds to step S913.

In step S913, under the assumption that deceleration assistance is unnecessary, Gx_brk_t is set to Gx_brk and Fbrk is set to 0.

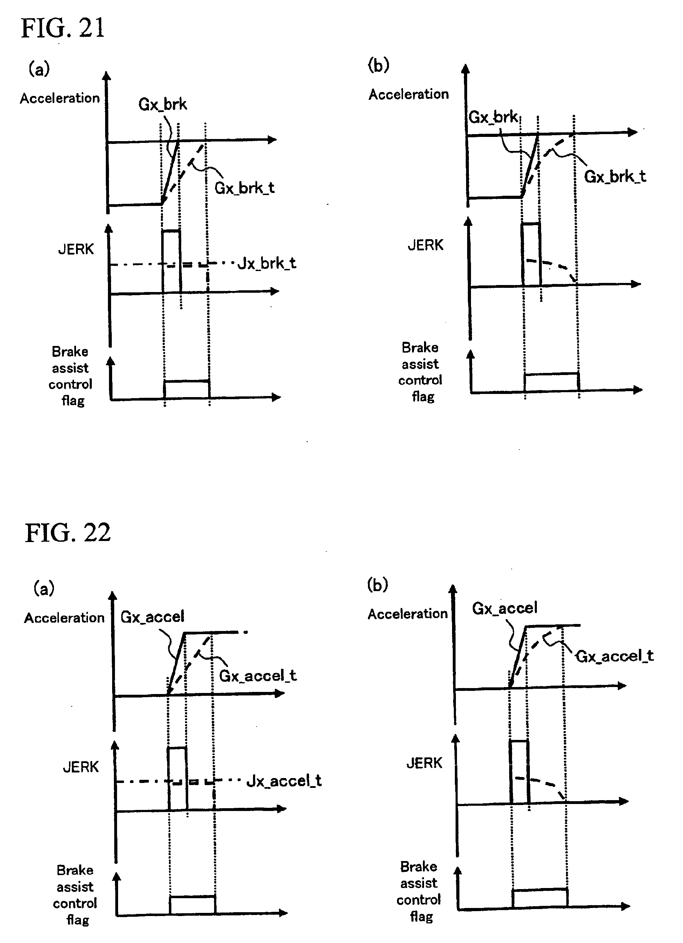

In step S914, the brake assistance control flag Fbrk is set to 1 and Gx_brk_t is computed so that deceleration assistance performed when jerk due to brake pedal release is excessive is performed. At this point, as for the computation method of Gx_brk_t, either a method of computing Gx_brk_t based on a preset jerk Jx_brk_t such as that shown in FIG. 21(a) or a method in which a value calculated by applying a primary delay filter to Gx_brk is assumed to be Gx_brk_t as shown in FIG. 21(b) may be used. In addition, when the driver operates the accelerator pedal during brake assistance flag control after brake pedal release, Jx_brk_t may be changed to a large value Jx_brk_tl under the assumption that the driver is requesting acceleration. Furthermore, when Gx_brk_t is computed using a primary delay filter, the time constant of the primary delay filter may be changed to a small value. In this case, either Jx_brk_tl or the time constant of the primary delay filter is determined based on the jerk Jx_accel that is generated due to an accelerator pedal operation of the driver.

In step S915, the brake assistance control flag is set to 1 and Gx_t_s is set to Gx_brk_t.

After the computation of step S910 is performed, the flow proceeds to step S906.

In step S920, an acceleration indicator Gx_accel for accelerator operation assistance during acceleration is computed. A computation flowchart of Gx_accel is shown in FIG. 19.

In step S921, a judgment is made on whether a jerk Jx_accel generated due to an accelerator operation by the driver is greater than a given threshold JaccelLmt or whether an accelerator assistance control flag Faccel is 1. In this case, JaccelLmt is a tolerance of jerk accompanying pedal brake release and is a value set in advance. When Jx_accel is greater than JaccelLmt, a judgment is made to the effect that the jerk due to an accelerator operation by the driver is excessive and that acceleration assistance is necessary, and the flow proceeds to step S922. In addition, when the brake assistance control flag Faccel is 1, a judgment is made to the effect that brake assistance control is taking place and the flow proceeds to step S923. Otherwise, a judgment to the effect that deceleration assistance is unnecessary is made and the flow proceeds to step S922.

In step S922, under the assumption that acceleration assistance is unnecessary, Gx_accel_t is set to Gx_accel and Faccel is set to 0.

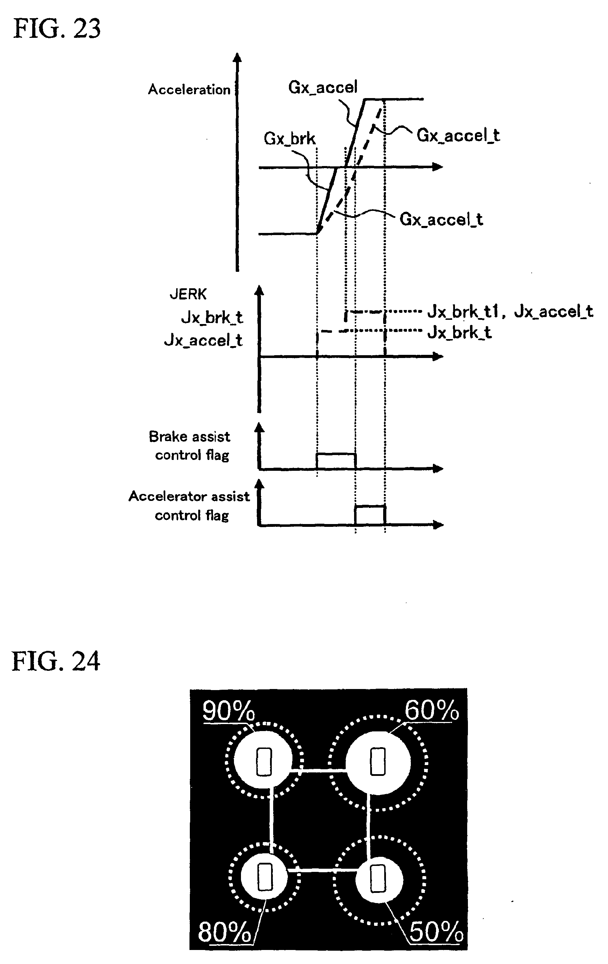

In step S923, the accelerator assistance control flag Faccel is set to 1 and Gx_accel_t is computed so that deceleration assistance performed when jerk due to an accelerator operation by the driver is excessive is performed. At this point, as for the computation method of Gx_accel_t, either a method of computing Gx_accel_t based on a preset jerk Jx_accel_t such as that shown in FIG. 22(a) or a method in which a value calculated by applying a primary delay filter to Gx_accel is assumed to be Gx_accel_t as shown in FIG. 22(b) may be used. In this case, when accelerator assistance control is to be performed immediately after the brake assistance control described above as shown in FIG. 23, Jx_accel_t is adjusted to take a value more or less similar to the jerk Jx_accel_tl upon an accelerator operation by the driver. Accordingly, the acceleration from deceleration to acceleration can be varied in a smooth manner.

In step S924, Gx_accel and G_accel_t is compared, and when Gx_accel is greater than Gx_accel_t, the flow proceeds to step S922. Otherwise, the processing is concluded.

After the computation of step S920 is performed, the flow proceeds to step S906.

In step S906, control instructions for the information display, the brake actuator, the brake lamp, and the electronic control throttle are computed from Gx_brk_t, Gx_accel_t, Fbrk, and Faccel.

When Fbrk is 1, the control instruction value of the brake actuator is computed so as to generate Gx_brk_t. In this case, the brake actuator may either be a friction brake that generates a braking force at each wheel by pressing a brake pad against a brake disk, a regenerative brake that utilizes motor regeneration, or an engine brake that utilizes the rotational resistance of the engine. At this point, if the generated acceleration is smaller than a threshold Brklamp, a control instruction is computed so that the brake lamp is illuminated. In addition, a control instruction to the information presenter is computed so that either a display is performed or a sound is generated, or both a display performed and a sound is generated, to convey that deceleration control is taking place. Furthermore, as a method of conveying that deceleration control is taking place to the driver, the brake pedal may be vibrated using a vibration generator.

When Faccel is 1, the control instruction value of the electronic control throttle actuator is computed so as to generate Gx_accel_t. At this point, when the vehicle is capable of generating a driving force using motor torque, Gx_accel_t may be realized using motor torque instead of the electronic control throttle actuator. In this case, the control instruction value is computed so as to generate Gx_accel_t. In addition, a control instruction to the information presenter is computed so that either a display is performed or a sound is generated, or both a display performed and a sound is generated, to convey that acceleration control is taking place. Furthermore, as a method of conveying that acceleration control is taking place to the driver, the accelerator pedal may be vibrated using a vibration generator.

When both Fbrk and Faccel are both 0, drive control of the information presenter 4, the brake actuator 6, the brake lamp 7, and the electronic control throttle 8 is not performed.

In the present embodiment, the control of the brake actuator 6 and the electronic control throttle 8 during the drive assist mode is performed by computing acceleration instructions such as Gx_brk_t and Gx_accel_t. Alternatively, instead of computing acceleration instructions, excessive jerk may be prevented by directly applying, as necessary, a primary delay filter to operation amounts of the driver.

For example, in a hydraulic brake system in which a brake pad is pressed against a brake disk by hydraulic pressure, when the speed of reduction of the master cylinder pressure Pm upon brake pedal release by the driver is equal to or greater than a given threshold, a judgment to the effect that jerk is to become excessive may be made, whereby the wheel cylinder pressure at each wheel is to be controlled using a value calculated by processing the master cylinder pressure Pm with a primary delay filter as a brake fluid instruction. In a similar manner, when the pedal stroke speed when stepping on the accelerator pedal is equal to or greater than a given threshold, a control instruction for the electronic control throttle may be created based on a value calculated by processing the pedal stroke with a primary delay filter to control throttle opening.

After the control instructions to the information presenter 4, the brake actuator 6, the brake lamp 7, and the electronic control throttle 8 are computed, the flow proceeds to step S1000.

In step S1000, based on control instructions obtained in steps S600, S700, S800, and S900, drive control of the information presenter 4, the brake actuator 6, the brake lamp 7, and the electronic control throttle 8 is executed.

As described above, by performing driving skill assistance in correspondence with modes, driving skill assistance corresponding to the demands of drivers such as in cases where a driver requires only information presentation or a driver requires driving assistance can be performed without having a driver not requiring driving skill assistance experience the hassle caused by unnecessary information or unnecessary operation assistance. In addition, by presenting driving performed by a driver in the form of a skill evaluation, the driver is now able to realize problem areas of his or her driving operations and acquire new driving pleasure by furthering driving skills and thereby securing better evaluations.

Furthermore, in the present embodiment, while evaluation indicators on the driving skill of driver is created and an evaluation is performed based on acceleration generated on a vehicle and on jerk, when detecting or estimating changes in the wheel load on each wheel, the change rate of the wheel load on each wheel may be used as an evaluation indicator, whereby the driving skill of driver is to be evaluated depending on whether the change rate of the wheel load is constant or not. In a similar manner, information to be presented to a driver in the information mode need not be limited to acceleration information described above, and wheel load information of each wheel may be presented instead. Moreover, when detecting or estimating a tire force upper limit that can be generated on each wheel and a tire force current value currently being generated on each wheel, such a tire force upper limit and a tire force current value may be presented as information. For example, as shown in FIG. 24, a ratio NF of the tire force current value to the tire force upper limit may be displayed. In addition, the driving skill of a driver may be evaluated using a sum of squares of the difference between an average value NFBar of the ratio of the tire force current value to the tire force upper limit of each of four wheels and NF of each wheel as a driving skill evaluation indicator.

[Second Embodiment]

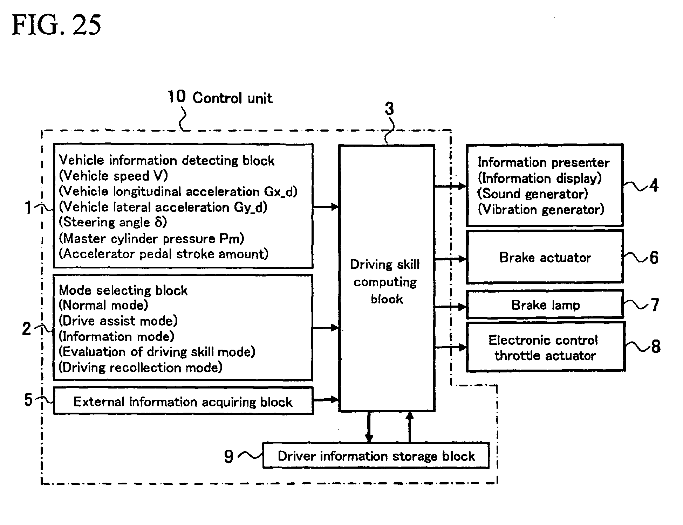

Hereinafter, a configuration and operations of a driving skill improvement device according to a second embodiment will be described with reference to FIGS. 25 to 29.

First, a configuration of the driving skill improvement device according to the second embodiment will be described with reference to FIG. 25.

FIG. 25 is a system block diagram showing a configuration of the driving skill improvement device according to the second embodiment and corresponds to FIG. 1(B) of the first embodiment. Parts corresponding to respective parts shown in FIG. 1(B) are assigned the same reference numerals.

In the same manner as the first embodiment, the driving skill improvement device according to the present embodiment comprises: a vehicle information detecting block 1 for detecting a motion state of the vehicle and an operation amount by a driver; a mode selecting block 2 for selecting which mode is to be executed; an outside information acquiring block 5; a driving skill computing block 3 for performing control computations based on information from the vehicle information detecting block 1, the mode selecting block 2, and the outside information acquiring block 5; and based on an instruction from the driving skill computing block 3, an information presenter 4 which presents information to the driver; a brake actuator 6 which generates braking force on each wheel; a brake lamp 7 which notifies deceleration of the vehicle to following vehicles; an electronic control throttle actuator 8 which controls engine torque, and a driver information storage block 9 for storing operation history or driving skill evaluation results of a driver.

Since the vehicle information detecting block 1, the mode selecting block 2, the driving skill computing block 3, the information presenter 4, the outside information acquiring block 5; the brake actuator 6, the brake lamp 7, and the an electronic control throttle actuator 8 are the same as those in the first embodiment described above, descriptions thereof shall be omitted. The driver information storage block 9 stores driving skill evaluation points of a driver obtained in the evaluation of driving skill mode, vehicle information upon skill judgment, and the like.

As the driver information storage block 9, any storage medium such as a hard disk or a Flash memory which is capable of retaining stored data even when the main power of a vehicle is shut down may be used. In addition, the driver information storage block 9 may either be fixed inside the device or arranged so as to be easily detachable.

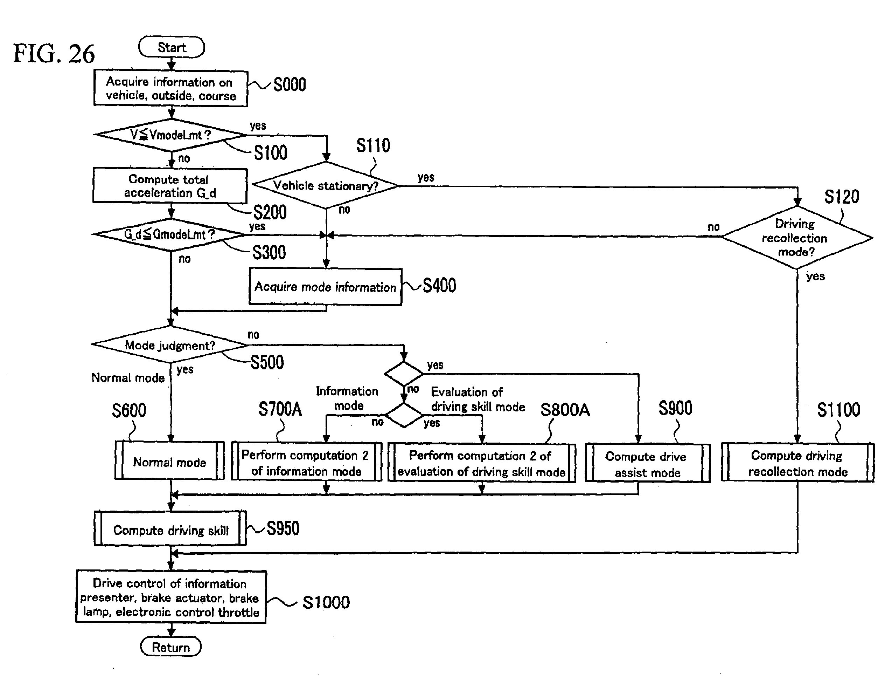

First, processing operations of the driving skill improvement device according to the present embodiment will be described with reference to FIG. 26.

In FIG. 26, steps 5000, S100, S200 to S600, S900, and S1000 are the same as those depicted in FIG. 6 showing processing operations of the first embodiment, and descriptions thereof shall be omitted.

In step S110, a judgment is made on whether the vehicle is stationary or not. If the vehicle is stationary, the flow proceeds to step S120. Otherwise, the flow proceeds to step S400.

In step S120, a judgment is made on whether the driver has selected a driving recollection mode or not. When the driver has selected the driving recollection mode, the flow proceeds to step S1100. Otherwise, the flow proceeds to step S400.

In step S1100, a drive control amount of the information presenter depending on the driving recollection mode is computed. In the driving recollection mode, a longitudinal acceleration or a lateral acceleration generated due to driving by the driver, a longitudinal acceleration indicator or the like is displayed based on vehicle information saved in the driver information storage block 9. At this point, comments describing which acceleration change was negative or positive in what way, or advice towards improvement may be displayed at the same time. For example, an advice aimed at the improvement of the driving skill of a driver may be arranged to be displayed, such as presenting an advice of "try to release the brakes a little more gradually when you start turning the steering wheel" to a driver who releases the brake too abruptly in regards to steering at the start of a turn. After computing a drive control instruction to the information presenter in the drive recollection mode, the flow proceeds to step S1000.

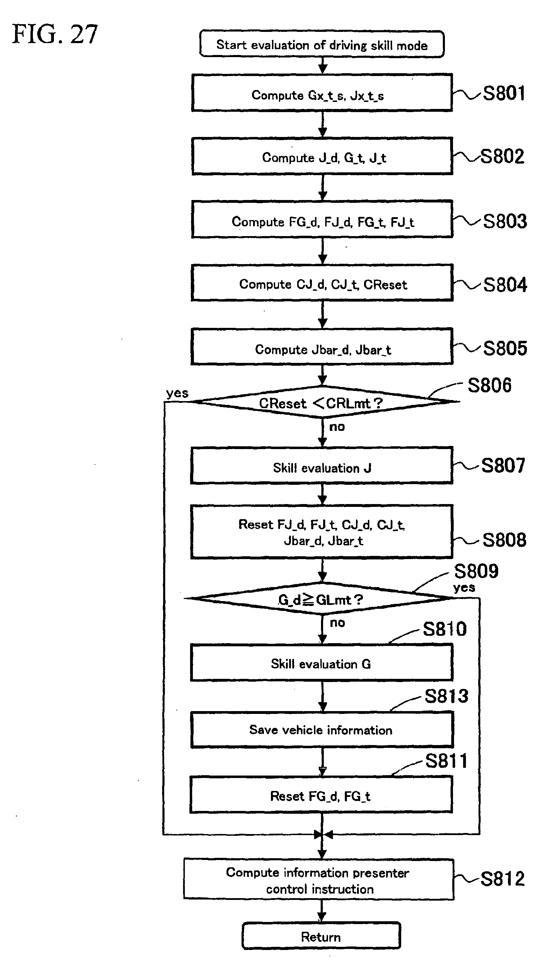

In step S800A, computation in the evaluation of driving skill mode is performed. A computation flowchart of the evaluation of driving skill mode is shown in FIG. 27. Since the computations performed in steps S801 to S812 are the same as those shown in FIG. 12, descriptions thereof shall be omitted.

In step S813, vehicle information when the value of FG_d is 1 is saved in the driver information storage block 9. In this case, a longitudinal acceleration $Gx\_d$, a lateral acceleration $Gy\_d$, and a longitudinal acceleration indicator $Gx\_t$ generated due to the driving by the driver are saved as vehicle information. In addition, besides $Gx\_d$, $Gy\_d$, and $Gx\_t$, a generated longitudinal jerk $Jx\_d$ and lateral jerk $Jy\_d$, a steering angle $\delta$ by the driver, a master brake pressure $Pm$, a throttle opening, a vehicle speed $V$, and a yaw rate $r$ may be saved. After the information is saved, the flow proceeds to step S811.

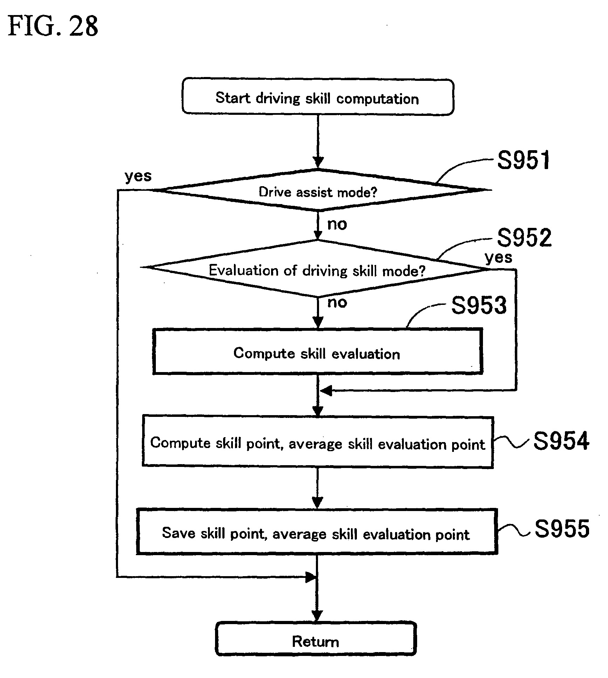

In step S950, computation of the driving skill of the driver is performed. FIG. 28 shows a computation flowchart of a computation of the driving skill of a driver.

In step S951, a judgment is made on whether the mode is the drive assist mode or not. When the mode is the drive assist mode, computation of the driving skill of the driver is not performed and processing is concluded. When the mode is not the drive assist mode, the flow proceeds to step S952.

In step S952, a judgment is made on whether the mode is the evaluation of driving skill mode or not. When the mode is the evaluation of driving skill mode, the flow proceeds to step S954. If the mode is not the evaluation of driving skill mode, the flow proceeds to step S953.

In step S953, skill evaluation computation is performed. Since the contents of computation is the same as the computation performed in the evaluation of driving skill mode shown in FIG. 12, a description thereof will be omitted. After computation is performed, the flow proceeds to step S954.

In step S954, a skill point PointTotal and a average skill evaluation point PointBar are computed. PointTotal is a value calculated by adding PointG obtained from the skill evaluation computation described above. In addition, an average skill evaluation point PointBar is performed based on a value PointBar calculated by averaging PointTotal with the number of skill judgments G. For example, when the skill judgment G described above has been performed three times, a total of PointG obtained during the three times becomes PointTotal and the average of PointTotal over the three times becomes PointBar. After computation is performed, the flow proceeds to step S955.

In step S955, the skill point PointTotal, the average skill evaluation point PointBar, and the number of skill judgments G are saved in the driver information storage block 9. Accordingly, the skill point PointTotal and the average still evaluation point PointBar can be saved even when the engine is shut off. After computation is performed, the flow is concluded.

By saving the skill point PointTotal and the average still evaluation point PointBar as described above, the more frequently the driver drives, the higher the skill points earned by the driver, and the higher the skill evaluation of the driving, the more quickly the points can be earned. Furthermore, since skill evaluations are not performed in the drive assist mode, an example of the utilization in the information mode of skill points PointTotal and average still evaluation points PointBar obtained through skill evaluations will be described below as a utilization example of skill points PointTotal and average still evaluation points PointBar.

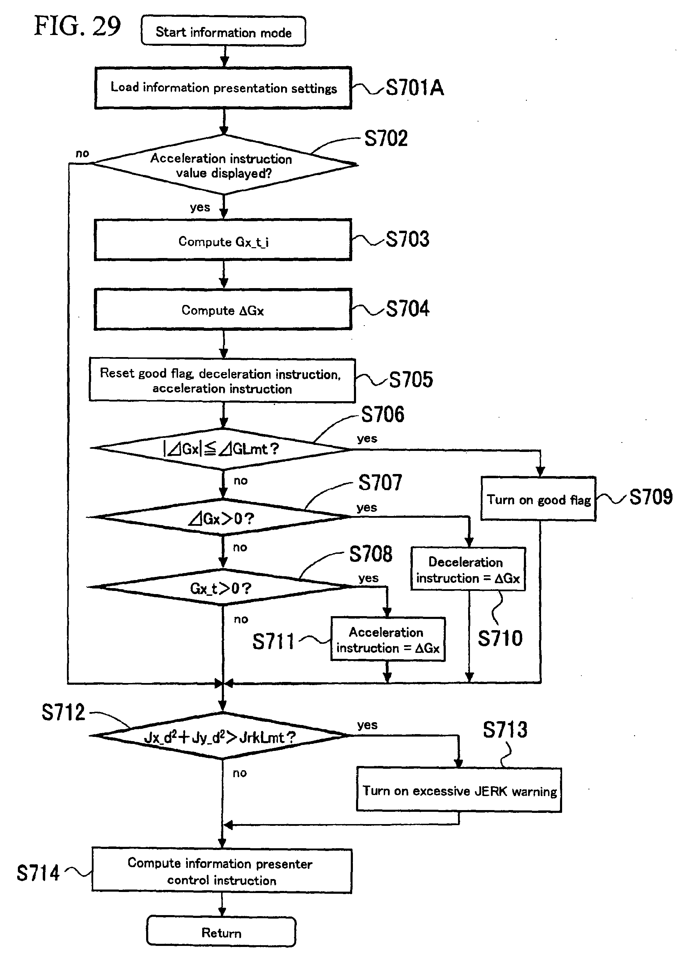

In step S700A in FIG. 26, computation in the information mode is performed. A computation flowchart in the information mode is shown in FIG. 29. Since the steps S702 to S714 shown in FIG. 29 are the same as those shown in FIG. 7, descriptions thereof shall be omitted.

After the information mode is started, in step S701A, information display settings are loaded. In step S701A, a setting representing what kind of information the driver has set to be presented is loaded. At this point, selectable display items may be varied based on the skill point PointTotal or the average still evaluation point PointBar, or on both the skill point PointTotal and the average still evaluation point PointBar. For example, options of image display methods such as those shown in FIG. 8 described above may be increased as the skill point PointTotal increases up to or over a certain point. In addition, the aforementioned acceleration allowed by the driver may be changed to as to be settable to a greater value when the skill point reaches or exceeds a given value Ptotal1 and the average skill evaluation point PointBar reaches or exceeds a given value Pbar1.

In addition, as information to be presented to the driver, the average skill evaluation point PointBar may be arranged to be presented on the information display. In this case, as shown in FIG. 17 described above, skill ranks in correspondence with the average skill evaluation point PointBar may be displayed. Furthermore, a character that grows along with the skill point PointTotal and the average skill evaluation point PointBar may be displayed. In this case, the growth process of the character may be varied depending on the relationship between the skill point PointTotal and the average skill evaluation point PointBar.

In addition, as a utilization example of the skill point PointTotal and the average skill evaluation point PointBar other than the information mode, the selection of a new mode may be enabled according to the skill point PointTotal and the average skill evaluation point PointBar. For example, the case of a tuning mode that is mode other than those described above will now be described.

In the tuning mode, the driver is capable of changing, within a certain range, vehicle control characteristics such as the throttle opening of the accelerator pedal with respect to a stroke, the assistance force of power steering, and in the case of a vehicle mounted with automatic transmission, shift change timings. As an additional changeable item, in a case where a safety device such as a lateral slide prevention device is mounted, a control intervention timing of the lateral slide prevention device or a control amount upon control intervention thereof may be arranged so as to be changeable within a certain range by the driver. Furthermore, a device that enables characteristics such as a brake booster, suspension, stabilizer and the like to be changed via electronic control may be set as a changeable item, whereby the control characteristics thereof is to be made changeable within a certain range by the driver.

Moreover, in the tuning mode, in addition to individually changing such changeable items, settings dedicated in advance to specific purposes may be arranged so as to be selectable. For example, settings including respective items set to increase fuel efficiency may be designated in advance as "Eco style" and settings including respective items set to increase acceleration characteristics as "Sports style", whereby control characteristics of the vehicle can be changed by having the driver select either the "Eco style" or the "Sports style". In addition, settings in which the driver has changed the control characteristics of the respective items can be arranged to be saved as "Custom style".

When the skill point PointTotal is equal to or greater than a given value Ptotal2, the average skill evaluation point PointBar is equal to or greater than a given value Pbar2, and the vehicle is stationary, the tuning mode may be arranged so as to be selectable. Changeable items in the tuning mode may be changed depending on the PointTotal and the PointBar. For example, the higher the PointTotal and the PointBar, the larger the number of items whose settings can be changed. In a similar manner, the higher the PointTotal and the PointBar, the larger the number of options of selectable styles.

Furthermore, the skill point PointTotal and the average skill evaluation point PointBar may be stored for each driver, whereby the skill point PointTotal and the average skill evaluation point PointBar are to be reflected according to the driver. In this caste, driver recognition method may include a method in which a driver himself/herself performs settings, a method in which a driver is recognized by a imaging device such as a camera, and a method in which a driver is recognized by fingerprint or vein information.

As described above, by storing a skill point PointTotal and an average skill evaluation point PointBar and performing information presentation in accordance thereto, the driver is now able to visually realize improvement in his/her own driving skill. In addition, by arranging a new mode in accordance with the skill point PointTotal and the average skill evaluation point PointBar so as to be selectable and, as is the case of the tuning mode, enabling customization of vehicle control characteristics according to driving skill, the driver is able to experience new driving pleasure along with improvements in driving skill.

[Third Embodiment]

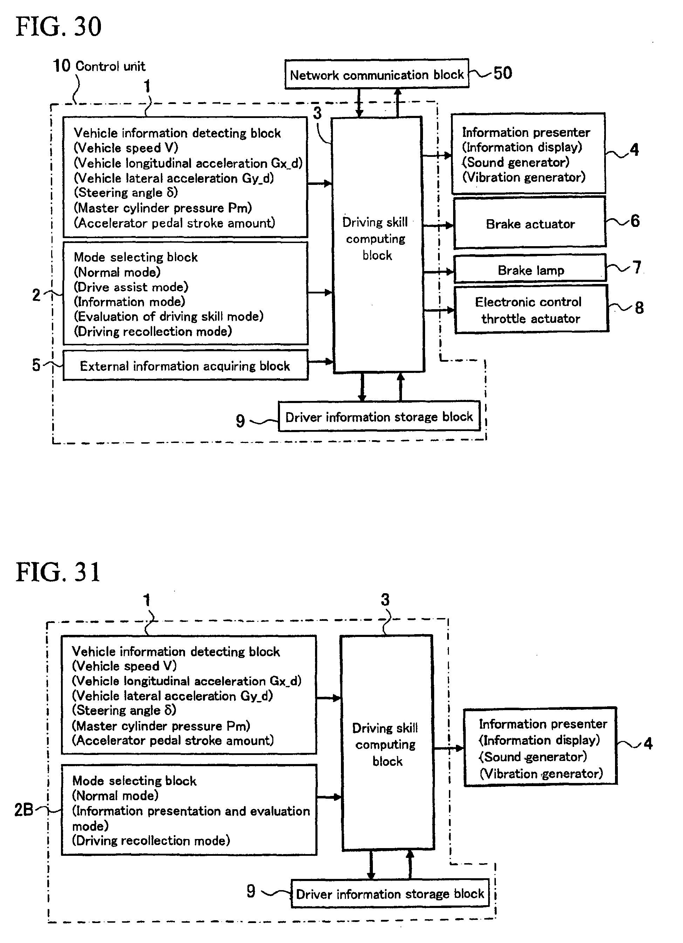

FIG. 30 is a system block diagram showing a configuration of the driving skill improvement device according to a third embodiment and corresponds to FIG. 25 of the second embodiment. Parts corresponding to respective parts shown in FIG. 25 are assigned the same reference numerals.

In the same manner as the second embodiment, the driving skill improvement device according to the present embodiment comprises: a vehicle information detecting block 1 for detecting a motion state of the vehicle and an operation amount by a driver; a mode selecting block 2 for selecting which mode is to be executed; an outside information acquiring block 5; a driving skill computing block 3 for performing control computations based on information from the vehicle information detecting block 1, the mode selecting block 2, and the outside information acquiring block 5; and based on an instruction from the driving skill computing block 3, an information presenter 4 which presents information to the driver; a brake actuator 6 which generates braking force on each wheel; a brake lamp 7 which notifies deceleration of the vehicle to following vehicles; an electronic control throttle actuator 8 which controls engine torque; a driver information storage block 9 for storing operation history or driving skill evaluation results of a driver; and a network communication block 50 capable of communicating with a network outside of the vehicle.

Since the vehicle information detecting block 1, the mode selecting block 2, the driving skill computing block 3, the information presenter 4, the outside information acquiring block 5; the brake actuator 6, the brake lamp 7, the electronic control throttle actuator 8, and the driver information storage block 9 are the same as those in the second embodiment described above, descriptions thereof shall be omitted. In addition, since the control flowcharts are also similar to those of the second embodiment described above, descriptions thereof shall be omitted. In the present embodiment, a description will be given on the use of the network communication block 50.

As the network communication block 50, any method may be used as long as communication is possible with an external network such as a method using wireless LAN or a method using a mobile terminal.

When the network communication block 50 is included, vehicle information saved in the driver information storage unit 9 can be arranged to as to be transmittable by the driver to a host computer. In addition, new modes or styles in the tuning mode may be arranged so as to be downloadable via means for communicating with the network.

Accordingly, the driver is now able to confirm his/her driving data even when separated from the vehicle, and by arranging new modes and styles so as to be downloadable, mode and style options can be expanded.

[Fourth Embodiment]

Hereinafter, a configuration and operations of a driving skill improvement device according to a fourth embodiment will be described with reference to FIGS. 31 to 35.

First, a configuration of the driving skill improvement device according to the fourth embodiment will be described with reference to FIG. 31.

FIG. 31 is a system block diagram showing a configuration of the driving skill improvement device according to the fourth embodiment and corresponds to FIG. 25 of the second embodiment. Parts corresponding to respective parts shown in FIG. 25 are assigned the same reference numerals.

In the same manner as the second embodiment, the driving skill improvement device according to the present embodiment comprises: a vehicle information detecting block 1 for detecting a motion state of the vehicle and an operation amount by a driver; a mode selecting block 2B for selecting which mode is to be executed; an outside information acquiring block 5; a driving skill computing block 3 for performing control computations based on information from the vehicle information detecting block 1, the mode selecting block 2, and the outside information acquiring block 5; and based on an instruction from the driving skill computing block 3, an information presenter 4 which presents information to the driver based on instructions from the driving skill computing block 3; and a driver information storage block 9 for storing operation history or driving skill evaluation results of a driver.

In the present embodiment, the mode selecting block 2B is arranged so that, in addition to the normal mode, a driving recollection mode, and an information presentation and evaluation mode that is a combination mode of the information mode and the evaluation of driving skill mode are set so as to be selectable..

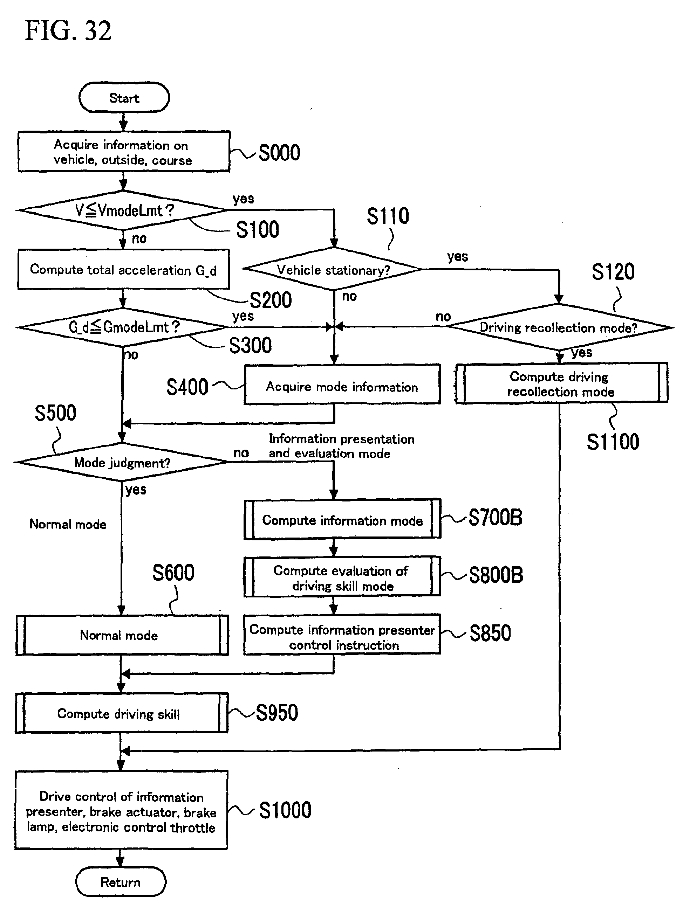

First, overall operations of the driving skill improvement device according to the present embodiment will be described with reference to FIG. 32.

In FIG. 32, since steps S000 to S600 and S900 to S1000 are the same as in the second embodiment (FIG. 27), descriptions thereof shall be omitted.

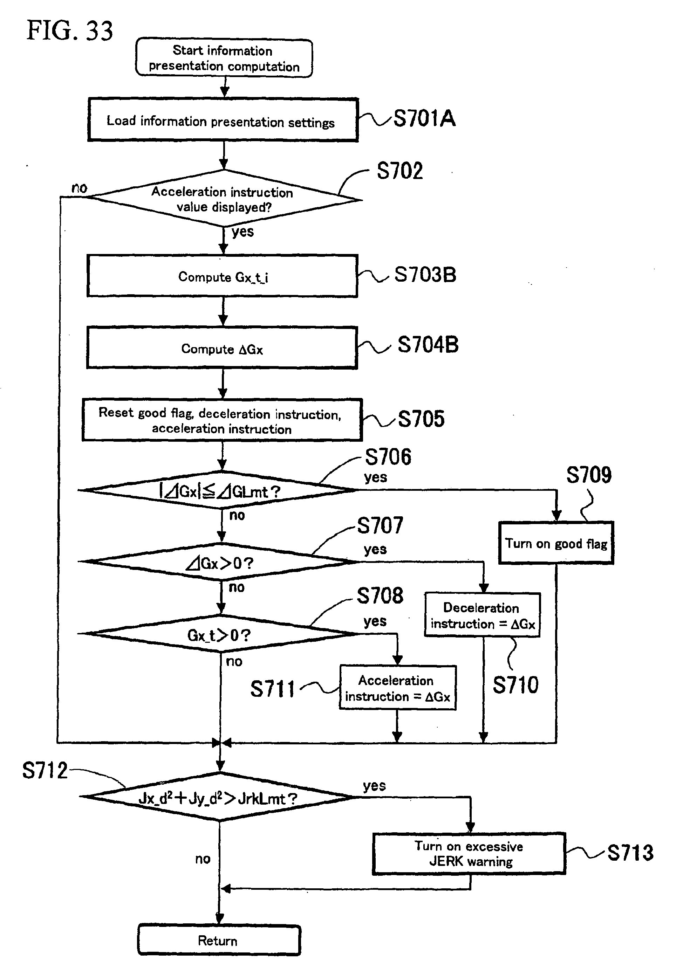

In step S700B, computation according to information presentation computation is performed. A computation flowchart according to information presentation computation is shown in FIG. 33.

In FIG.33, since the steps S701A, S702, and S705 to S713 are the same as in the second embodiment described above (FIG. 29), descriptions thereof shall be omitted.

In step S703B, a target longitudinal acceleration Gx_t_i for information presentation is computed. At this point, in the present embodiment which does not include an external information acquiring block, when no lateral acceleration is involved, Gx_t_i is not computed and is set to a value of 0. In addition, when lateral acceleration is involved, Gx_t_i is computed in the same manner as in the first and second embodiments described earlier. After computation is performed, the flow proceeds to step S704B.

In step S704B, when Gx_t_i is 0, Gx also takes a value of 0. Otherwise, a difference between Gx_t_i and Gx_d is computed according to Equation (10) above. After computation is performed, the flow proceeds to step 5705.

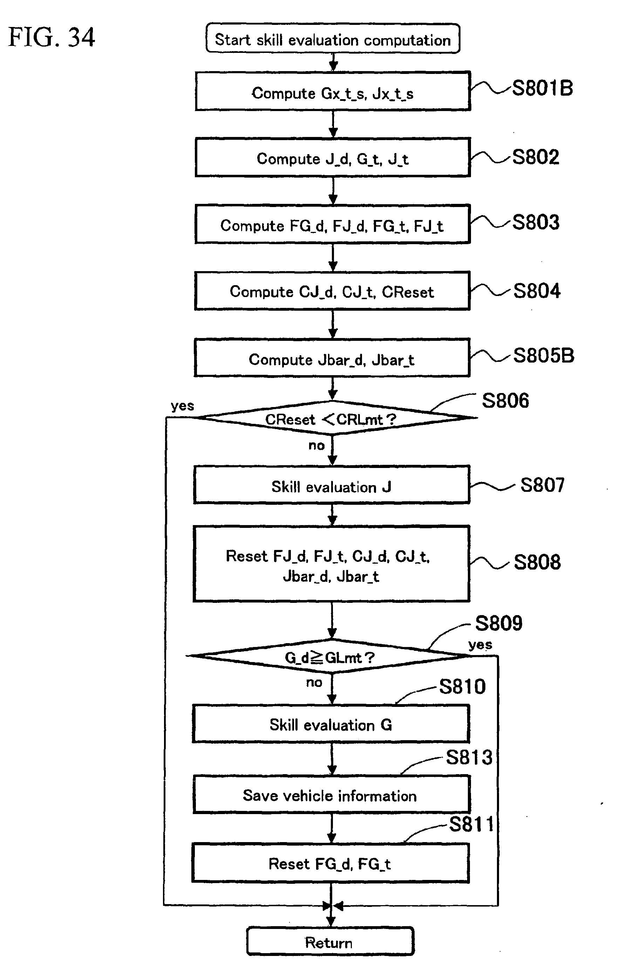

In step S800B, computation according to skill evaluation computation is performed. A computation flowchart according to information evaluation computation is shown in FIG. 34.

In FIG. 34, since the steps S802 to S804 and S806 to S811 are the same as in the first embodiment (FIG. 12), descriptions thereof shall be omitted.

In step S801B, a longitudinal acceleration instruction value Gx_t_s and a longitudinal jerk instruction value Jx_t_s for the evaluation of driving skill mode are computed. At this point, in the present embodiment which does not include an external information acquiring block, when no lateral acceleration is involved, Gx_t_s is not computed and is set to a value of 0. When lateral acceleration is being generated, computation is performed according to Equation (1) above by using the generated lateral acceleration Gy_d as Gy_t and the generated lateral jerk Jy_d as Jy_t. In addition, a value obtained by differentiating Gx_t_s is to be used as Jx_t_s. After computation is performed, the flow proceeds to step S802.

In step S805B, a square mean Jbar_d of the jerk generated by the driving of the driver and a square mean Jbar_t of the jerk instruction value are computed. As indicated by Equation (14) above, Jbar_d is a value calculated by dividing, by CJ_d, an integration value of J_d from a time point ts_d where FJ_d changes from 0 to 1 to a time point te_d where FJ_d changes from 1 to 0. When lateral acceleration is not involves, values of Jbar_x0, Jbar-txl, Jbar_ty0, and Jbar_ty1 set in advance as described earlier is set as Jbar_t depending on the movement state. In addition , when involving lateral acceleration, as indicated by Equation (15) above, Jbar_t is a value calculated by dividing, by CJ_t, an integration value of J_t from a time point ts_t where FJ_t changes from 0 to 1 to a time point te_t where FJ_t changes from 1 to 0. At this point, if J_d is smaller than the threshold JLmt, integration may be performed by setting J_d to 0. Accordingly, an increase in the integration value when J_d varies at a smaller value than the threshold JLmt can be prevented. In a similar manner, if J_t is smaller than the threshold JLmt, integration may be performed by setting J_t to 0. After computing Jbar_d and Jbar_t, the flow proceeds to step S806.

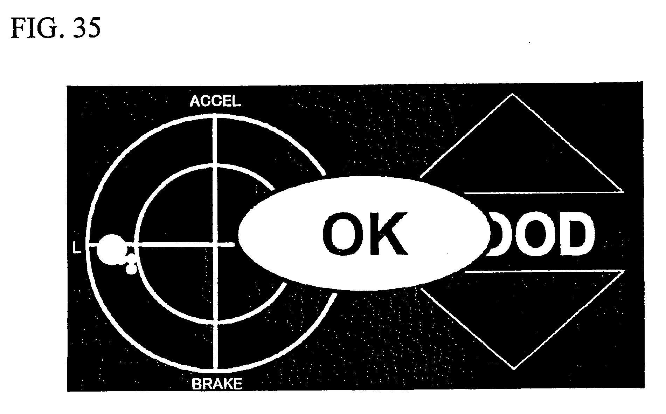

In step S850, a drive control instruction value of the information presenter 4 is computed from the results of information presentation computation and skill evaluation computation. As a drive method of the information presenter 4, the information presentation method in the information mode according to the first embodiment described earlier is to be used in combination with the information presentation method in the evaluation of driving skill mode according to the first embodiment only when skill judgment J and skill judgment G are performed by skill evaluation computation. For example, when skill judgment J and skill judgment G are performed in combination with the information display in the information display mode shown in FIG. 11, as shown in FIG. 35, skill evaluation results such as those shown in FIG. 16 or 17 may be displayed superimposed over a short period of time. In addition, when skill judgment J and skill judgment G are performed, display by the information display may be switched so as to display skill judgment results such as those shown in FIG. 16 or 17.

As described above, information presentation and skill evaluation can be realized even by a configuration less complicated than the first and second embodiments. Accordingly, a more inexpensive system can be constructed, and functions such as information presentation and skill evaluation described above can be realized even with a vehicle not mounted with an external information acquiring block.

In addition, in the present embodiment, while skill evaluation computation is performed after information presentation computation in the information presentation and evaluation mode, information presentation computation may be performed after skill evaluation computation. Furthermore, instead of preparing, in advance, a combination "information presentation and evaluation mode", a plurality of modes may be arranged so as to be selectable when the driver selects a mode, whereby control by a combination mode is to be realized when a plurality of modes is selected. For example, when the information presentation mode and the skill evaluation mode are provided, control by the same combination mode as the information presentation and evaluation mode described above may be realized when both the information presentation mode and the skill evaluation mode are selected by the driver.

This function can also be applied to the first, second and third embodiments, whereby control as a combination mode is realized by having the driver select a plurality of modes. In this case, depending on modes to be selected, simultaneous selection is to be disabled as necessary. For example, even if the information mode and the drive assist mode are simultaneously selectable, the simultaneous selection of the drive assist mode and the evaluation of driving skill mode is to be prohibited. Accordingly, it is now possible to prevent results in which operation amounts had been assisted in the drive assist mode from being evaluation in skill evaluation. In addition, it is now possible to arrange the skill point PointTotal or the average skill point to be increased only through improvement of the driver's own driving skill and without relying on the drive assist mode.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

**Claims**

1. A driving skill improvement device comprising a first detecting block that detects an operation state of a driver and a second detecting block that detects a motion state of a vehicle (20); a driving skill evaluation mode in which the driving skill of the driver is evaluated and a result of the evaluation is presented to the driver;
   **characterized in that**
   the driving skill improvement device being configured to compute an acceleration in the longitudinal direction as an acceleration indicator based on a lateral acceleration and lateral jerk generated by the vehicle (20); and the driving skill evaluation mode evaluates the driving skill of the driver based on the acceleration indicator, the acceleration generated by the vehicle (20), and a j erk.

2. The driving skill improvement device according to claim 1, further comprising a drive assist mode in which the acceleration of the vehicle (20) is controlled based on the acceleration indicator; an information mode in which at least one of the acceleration indicator, the operation state of the driver or the motion state of the vehicle (20) is presented to the driver; a combination mode in which at least two of the drive assist mode, the information mode, and the driving skill evaluation mode are combined; and

a mode selecting block (2) which selects at least one of the drive assist mode, the information mode, the driving skill evaluation mode and the combination mode in response to a request from the driver.

3. The driving skill improvement device according to claim 2, further comprising an information block (4) which presents information to the user, wherein the driving skill improvement device controls the information block (4) in accordance with the mode selected by the mode selecting block (2).

4. The driving skill improvement device according to claim 3, further comprising an acceleration control block which controls acceleration generated by the vehicle (20), wherein the information block (4) and the acceleration control block are controlled in accordance with the mode selected by the mode selecting block (2).

5. The driving skill improvement device according to at least one of claims 3 - 4, further comprising a navigation display as the information block (4), wherein information in the information mode and/or an evaluation result in the driving skill evaluation mode are displayed on the navigation display.

6. The driving skill improvement device according to at least one of claims 2 - 5, wherein an operation state of a driver to be used in the drive assist mode, information mode, and the driving skill evaluation mode includes a steering angle by the driver, and the driving skill improvement device computes, based on the steering angle, acceleration in the longitudinal direction of the vehicle as the acceleration indicator to be used in the drive assist mode, information mode, and the driving skill evaluation mode.

7. The driving skill improvement device according to at least one of claims 2 - 6, wherein a motion state of a vehicle (20) to be used in the drive assist mode, information mode, and the driving skill evaluation mode includes a yaw rate generated by the vehicle (20), and the driving skill improvement device computes, based on the yaw rate, acceleration in the longitudinal direction of the vehicle (20) as the acceleration indicator to be used in the drive assist mode, information mode, and the driving skill evaluation mode.

8. The driving skill improvement device according to at least one of claims 2 - 7, further comprising a detecting/estimating block which detects or estimates a tire force limit value that can be generated between each tire and a road surface and a currently generated tire force current value, wherein, in the information mode, the driving skill improvement device presents a state of each tire based on the tire force limit value and the tire force current value.

9. The driving skill improvement device according to claim 7, wherein, in the driving skill evaluation mode, the driving skill of the driver is evaluated based on the tire force limit value and the tire force current value, and an evaluation result is presented to the driver.

10. The driving skill improvement device according to at least one of claims 2 - 9, further comprising a detecting/estimating block which detects or estimates a wheels load and a wheel load change rate of each wheel, wherein, in the information mode, an operation state of the vehicle is presented based on the wheel load and the wheel load change rate of each wheel.

11. The driving skill improvement device according to claim 10, wherein, in the driving skill evaluation mode, the driving skill of the driver is evaluated based on the wheel load change rate, and an evaluation result is presented to the driver.

12. The driving skill improvement device according to at least one of claims 1 - 11, wherein the driving skill improvement device is arranged so as to be capable of executing a tuning mode in which the driver changes vehicle control characteristics

13. The driving skill improvement device according to at least one of claims 2 - 12, further comprising an evaluating block for evaluating a driving skill of a driver, wherein the driving skill improvement device changes modes selectable by the mode selecting block based on an evaluation point obtained by the evaluating block.

14. The driving skill improvement device according to at least one of claims 2 - 13, further comprising a detecting block which detects the presence/absence of a passenger, wherein when a passenger is present, the driving skill improvement device automatically executes any of the drive assist mode, the information mode, the driving skill evaluation mode or the combination mode.

**15.** The driving skill improvement device according to claim 14, wherein the mode to be automatically executed is arranged so as to be selectable by the driver.

**16.** The driving skill improvement device according to at least one of claims 3 - 15, wherein the information block (4) presents information in the information mode and an evaluation result in the driving skill evaluation mode to a driver using sound and/or speech.

**17.** A driving skill improvement method,comprising an driving skill evaluation mode in which the driving skill of the driver is evaluated and a result of the evaluation is presented to the driver; further comprising the steps of detecting an operation state of the driver; detecting a motion state of a vehicle (20); computing an acceleration in the longitudinal direction as an acceleration indicator based on a lateral acceleration and lateral jerk generated by the vehicle (20); and evaluating the driving skill of the driver based on the acceleration indicator, the acceleration generated by the vehicle (20), and a jerk.

**18.** The driving skill improvement method according to claim 17 , further comprising a drive assist mode in which the acceleration of the vehicle (20) is controlled based on the acceleration indicator; an information mode in which at least one of the acceleration indicators, the operation state of the driver or the motion state of the vehicle (20) is presented to the driver; a combination mode in which at least two of the drive assist mode, the information mode, and the driving skill evaluation mode are combined; and
a mode selecting block (2) which selects at least one of the drive assist mode, the information mode, the driving skill evaluation mode and the combination mode in response to a request from the driver;
and further comprising the step of setting the drive assist mode and the driving skill evaluation mode.

**Patentansprüche**

**1.** Fahrkönnen-Verbesserungsvorrichtung mit einem ersten Erfassungsblock, der einen Tätigkeitszustand eines Fahrers erfasst, und einem zweiten Block, der einen Bewegungszustand eines Fahrzeugs (20) erfasst; einem Fahrkönnen-Auswertungsmodus, in dem das Fahrkönnen des Fahrers ausgewertet und das Ergebnis der Auswertung dem Fahrer präsentiert wird;
**dadurch gekennzeichnet, dass**
die Fahrkönnen-Verbesserungsvorrichtung dazu konfiguriert ist, eine Beschleunigung in Längsrichtung als einen Beschieunigungsindikator auf der Grundlage einer Seitenbeschleunigung und eines Seitenrucks zu berechnen, die vom Fahrzeug (20) erzeugt werden; und der Fahrkönnen-Auswertungsmodus das Fahrkönnen des Fahrers auf der Grundlage des Beschleunigungsindikators, der von dem Fahrzeug (20) erzeugten Beschleunigung und einem Ruck auswertet.

**2.** Fahrkönnen-Verbesserungsvorrichtung nach Anspruch 1, weiterhin mit einem Fahrassistenzmodus, in dem die Beschleunigung des Fahrzeugs (20) auf der Grundlage des Beschleunigungsindikators gesteuert wird, einem Informationsmodus, indem vom Beschleunlgungsindikator, dem Tätigkeitszustand des Fahrers oder dem Bewegungszustand des Fahrzeugs (20) zumindest eines dem Fahrer präsentiert wird; einem Kombinationsmodus, in dem vom Fahrassistenzmodus, dem Informationsmodus und dem Fahrkönnen-Auswertungsmodus zumindest zwei kombiniert werden; und
einem Modusauswahlblock (2), der von dem Fahrassistenzmodus, dem Informationsmodus, dem Fahrkönnen-Auswertungsmodus und dem Kombinationsmodus als Reaktion auf eine Anfrage vom Fahrer zumindest einen auswählt.

**3.** Fahrkönnen-Verbesserungsvorrichtung nach Anspruch 2, weiterhin mit einem Informationsblock (4), der dem Benutzer Informationen präsentiert, wobei die Fahrkönnen-Verbesserungsvorrichtung den Informationsblock (4) nach Maßgabe des von dem Modusauswahlblock (2) ausgewählten Modus steuert.

**4.** Fahrkönnen-Verbesserungsvorrichtung nach Anspruch 3, weiterhin mit einem Beschleunigungssteuerungsblock, der die von dem Fahrzeug (20) erzeugte Beschleunigung steuert, wobei der Informationsblock (4) und der Beschleunigungssteuerungsblock gemäß dem von dem Modusauswahlblock (2) ausgewählten Modus gesteuert werden.

**5.** Fahrkönnen-Verbesserungsvorrichtung nach mindestens einem der Ansprüche 3 bis 4, weiterhin mit einer Navigationsanzeige als dem Informationsblock (4), wobei Informationen im Informationsmodus und/oder ein Auswertungsergebnis im Fahrkönnen-Auswertungsmodus auf der Navigationsanzeige angezeigt werden.

6. Fahrkönnen-Verbesserungsvorrichtung nach mindestens einem der Ansprüche 2 bis 5, wobei ein Tätigkeitszustand eines Fahrers, der im Fahrassistenzmodus, Informationsmodus und dem Fahrkönnen-Auswertungsmodus herangezogen werden soll, einen Lenkwinkel vom Fahrer beinhaltet und die Fahrkönnen-Verbesserungsvorrichtung auf der Grundlage des Lenkwinkels die Beschleunigung in Längsrichtung des Fahrzeugs als den Beschleunigungsindikator berechnet, der im Fahrassistenzmodus, Informationsmodus und dem Fahrkönnen-Auswertungsmodus herangezogen werden soll.

7. Fahrkönnen-Verbesserungsvorrichtung nach mindestens einem der Ansprüche 2 bis 6, wobei ein Bewegungszustand eines Fahrzeugs (20), der im Fahrassistenzmodus, Informationsmodus und dem Fahrkönnen-Auswertungsmodus herangezogen werden soll, eine von dem Fahrzeug (20) erzeugte Gierrate beinhaltet, und die Fahrkönnen-Verbesserungsvorrichtung auf der Grundlage der Gierrate die Beschleunigung in Längsrichtung des Fahrzeugs (20) als den Beschleunigungsindikator berechnet, der in dem Fahrassistenzmodus, Informationsmodus und dem Fahrkönnen-Auswertungsmodus herangezogen werden soll.

8. Fahrkönnen-Verbesserungsvorrichtung nach mindestens einem der Ansprüche 2 bis 7, weiterhin mit einem Erfassungs/Einschätzungsblock, der einen Reifenkraftgrenzwert, der zwischen jedem Reifen und einer Straßenoberfläche erzeugt werden kann,
und einen aktuell erzeugten Reifenkraft-Istwert erfasst oder schätzt, wobei die Fahrkönnen-Verbesserungsvorrichtung im Informationsmodus einen Zustand jedes Reifens auf der Grundlage des Reifenkraftgrenzwerts und des Reifenkraft-Istwerts präsentiert.

9. Fahrkönnen-Verbesserungsvorrichtung nach Anspruch 7, wobei die Fahrkönnen des Fahrers im Fahrkönnen-Auswertungsmodus auf der Grundlage des Reifenkraftgrenzwerts und des Reifenkraft-Istwerts ausgewertet und dem Fahrer ein Auswertungsergebnis präsentiert wird.

10. Fahrkönnen-Verbesserungsvorrichtung nach mindestens einem der Ansprüche 2 bis 9, weiterhin mit einem Erfassungs-/Einschätzblock, der eine Radlast und eine Radlast-Änderungsrate jedes Rads erfasst oder schätzt, wobei ein Betriebszustand des Fahrzeugs im Informationsmodus auf der Grundlage der Radlast und der Radlast-Änderungsrate jedes Rads präsentiert wird.

11. Fahrkönnen-Verbesserungsvorrichtung nach Anspruch 10, wobei die Fahrkönnen des Fahrers im Fahrkönnen-Auswertungsmodus auf der Grundlage der Radlast-Änderungsrate ausgewertet und dem Fahrer ein Auswertungsergebnis präsentiert wird.

12. Fahrkönnen-Verbesserungsvorrichtung nach mindestens einem der Ansprüche 1 bis 11, wobei die Fahrkönnen-Verbesserungsvorrichtung so angeordnet ist, dass sie imstande ist, einen Abstimmungsmodus auszuführen, in dem der Fahrer Fahrzeugsteuerungseigenschaften ändert.

13. Fahrkönnen-Verbesserungsvorrichtung nach mindestens einem der Ansprüche 2 bis 12, weiterhin mit einem Auswertungsblock zum Auswerten des Fahrkönnens eines Fahrers, wobei die Fahrkönnen-Verbesserungsvorrichtung Modi, die durch den Modusauswahlblock ausgewählt werden können, auf der Grundlage eines Auswertungspunkts ändert, der vom Auswertungsblock ermittelt wird.

14. Fahrkönnen-Verbesserungsvorrichtung nach mindestens einem der Ansprüche 2 bis 13, weiterhin mit einem Erfassungsblock, der das Vorhandensein/Fehlen eines
Fahrgasts erfasst, wobei die Fahrkönnen-Verbesserungsvorrichtung automatisch irgendeinen vom Fahrassistenzmodus, dem Informationsmodus, dem Fahrkönnen-Auswertungsmodus oder dem Kombinationsmodus ausführt, wenn ein Fahrgast anwesend ist.

15. Fahrkönnen-Verbesserungsvorrichtung nach Anspruch 14, wobei der automatisch auszuführende Modus so ausgelegt ist, dass er vom Fahrer ausgewählt werden kann.

16. Fahrkönnen-Verbesserungsvorrichtung nach mindestens einem der Ansprüche 3 bis 15, wobei der Informationsblock (4) einem Fahrer Informationen im Informationsmodus und ein Auswertungsergebnis im Fahrkönnen-Auswertungsmodus mittels Geräusch und/oder Sprache präsentiert.

17. Fahrkönnen-Verbesserungsverfahren mit einem Fahrkönnen-Auswertungsmodus, in dem das Fahrkönnen des Fahrers ausgewertet und dem Fahrer ein Ergebnis der Auswertung präsentiert wird; weiterhin mit den Schritten des Erfassens eines Tätigkeitszustands des Fahrers; Erfassens eines Bewegungszustands eines Fahrzeugs (20); Berechnens einer Beschleunigung in der Längsrichtung als einen Beschleunigungsindikator auf der Grundlage einer Seitenbeschleunigung und eines Seitenrucks, die vom Fahrzeug (20) erzeugt werden; und Auswertens des Fahrkönnens des Fahrers auf der Grundlage des Beschleunigungsindikators, der von dem Fahrzeug (20) erzeugten Beschleunigung und eines Rucks.

18. Fahrkönnen-Verbesserungsverfahren nach Anspruch 17, weiterhin mit einem Fahrassistenzmodus, in dem die Beschleunigung des Fahrzeugs (20) auf der Grundlage des BeschleunigungsIndikators gesteuert wird; einem Informationsmodus, in dem von dem Beschleunigungsindikator, dem Tätigkeitszustand des Fahrers oder dem Bewegungszustand des Fahrzeugs (20) zumindest einer dem Fahrer präsentiert wird; einem Kombinationsmodus, in dem von dem Fahrassistenzmfdus, dem Informationsmodus und dem Fahrkönnen-Auswertungsmodus zumindest zwei kombiniert werden; und einem Modusauswahlblock (2), der von dem Fahrassistenzmodus, dem Informationsmodus, dem Fahrkönnen-Auswertungsmodus und dem Kombinationsmodus als Reaktion auf eine Anfrage vom Fahrer zumindest einen auswählt;

und weiterhin mit dem Schritt des Einstellens des Fahrassistenzmodus und des Fahrkönnen-Auswertungsmodus.

**Revendications**

1. Dispositif d'amélioration de l'aptitude à conduire un véhicule comportant un premier bloc de détection qui détecte un état opérationnel d'un conducteur et un second bloc de détection qui détecte un état de déplacement d'un véhicule (20), un mode d'évaluation de l'aptitude à conduire un véhicule dans lequel l'aptitude à conduire un véhicule du conducteur est évaluée et un résultat de l'évaluation est présenté au conducteur,
**caractérisé en ce que**
le dispositif d'amélioration de l'aptitude à conduire un véhicule est configuré pour calculer une accélération dans la direction longitudinale en tant qu'indicateur d'accélération sur la base d'une accélération latérale et d'une secousse latérale générées par le véhicule (20), et le mode d'évaluation de l'aptitude à conduire un véhicule évalue l'aptitude à conduire un véhicule du conducteur sur la base de l'indicateur d'accélération, de l'accélération générée par le véhicule (20) et d'une secousse.

2. Dispositif d'amélioration de l'aptitude à conduire un véhicule selon la revendication 1, comportant en outre un mode d'assistance à la conduite dans lequel l'accélération du véhicule (20) est commandée sur la base de l'indicateur d'accélération, un mode d'informations dans lequel au moins l'un de l'indicateur d'accélération, de l'état opérationnel du conducteur ou de l'état de déplacement du véhicule (20) est présenté au conducteur, un mode de combinaison dans lequel au moins deux du mode d'assistance à la conduite, du mode d'informations et du mode d'évaluation de l'aptitude à conduire un véhicule sont combinés, et
un bloc de sélection de mode (2) lequel sélectionne au moins l'un du mode d'assistance à la conduite, du mode d'informations, du mode d'évaluation de l'aptitude à la conduite et du mode de combinaisons en réponse à une demande provenant du conducteur.

3. Dispositif d'amélioration de l'aptitude à conduire un véhicule selon la revendication 2, comportant en outre un bloc d'informations (4) lequel présente des informations à l'utilisateur, le dispositif d'amélioration de l'aptitude à conduire commandant le bloc d'informations (4) conformément au mode sélectionné par le bloc de sélection de mode (2).

4. Dispositif d'amélioration de l'aptitude à conduire un véhicule selon la revendication 3, comportant en outre un bloc de commande d'accélération lequel commande l'accélération générée par le véhicule (20), le bloc d'informations (4) et le bloc de commande d'accélération étant commandés conformément au mode sélectionné par le bloc de sélection de mode (2).

5. Dispositif d'amélioration de l'aptitude à conduire un véhicule selon au moins l'une des revendications 3 et 4, comportant en outre un écran de navigation en tant que bloc d'informations (4), des informations dans le mode d'informations et/ou un résultat d'évaluation dans le mode d'évaluation de l'aptitude à conduire un véhicule étant affichés sur l'écran de navigation.

6. Dispositif d'amélioration de l'aptitude à conduire un véhicule selon au moins l'une des revendications 2 à 5, dans lequel un état opérationnel d'un conducteur à utiliser dans le mode d'assistance à la conduite, le mode d'informations, et le mode d'évaluation de l'aptitude à conduire un véhicule inclut un angle de braquage par le conducteur, et le dispositif d'amélioration de l'aptitude à conduire un véhicule calcule, sur la base de l'angle de braquage, l'accélération dans la direction longitudinale du véhicule en tant qu'indicateur d'accélération à utiliser dans le mode d'assistance à la conduite, le mode d'informations, et le mode d'évaluation de l'aptitude à conduire un véhicule.

7. Dispositif d'amélioration de l'aptitude à conduire un véhicule selon au moins l'une des revendications 2 à 6, dans lequel un état de déplacement d'un véhicule (20) à utiliser dans le mode d'assistance à la conduite, le mode d'informations, et le mode d'évaluation de l'aptitude à conduire un véhicule inclut une vitesse de lacet générée par le véhicule (20), et le dispositif d'amélioration de l'aptitude à conduire un véhicule calcule, sur la base de la vitesse de lacet, l'accélération dans la direction longitudinale du véhicule (20) en tant qu'indicateur d'accélération à utiliser dans le mode d'assistance à la conduite, le mode d'informations, et le mode d'évaluation de l'aptitude à conduire un véhicule.

8. Dispositif d'amélioration de l'aptitude à conduire un véhicule selon au moins l'une des revendications 2 à 7, comportant en outre un bloc de détection/estimation lequel détecte ou estime une valeur limite de force de pneu qui peut être générée entre chaque pneu et une surface de roulement et une valeur courante de force de pneu actuellement générée, dans lequel, dans le mode d'informations, le dispositif d'amélioration de l'aptitude à conduire un véhicule présente un état de chaque pneu sur la base de la valeur limite de force de pneu et de la valeur courante de force de pneu.

9. Dispositif d'amélioration de l'aptitude à conduire un véhicule selon la revendication 7, dans lequel, dans le mode d'évaluation de l'aptitude à conduire un véhicule, l'aptitude à conduire un véhicule du conducteur est évaluée sur la base de la valeur limite de force de pneu et de la valeur courante de force de pneu, et un résultat d'évaluation est présenté au conducteur.

10. Dispositif d'amélioration de l'aptitude à conduire un véhicule selon au moins l'une des revendications 2 à 9, comportant en outre un bloc de détection/estimation qui détecte ou estime une charge de roue et un taux de changement de charge de roue de chaque roue, dans lequel, dans le mode d'informations, un état opérationnel du véhicule est présenté sur la base de la charge de roue et du taux de changement de charge de roue de chaque roue.

11. Dispositif d'amélioration de l'aptitude à conduire un véhicule selon la revendication 10, dans lequel, dans le mode d'évaluation de l'aptitude à conduire un véhicule, l'aptitude à conduire un véhicule du conducteur est évaluée sur la base du taux de changement de charge de roue, et un résultat d'évaluation est présenté au conducteur.

12. Dispositif d'amélioration de l'aptitude à conduire un véhicule selon au moins l'une des revendications 1 à 11, dans lequel le dispositif d'amélioration de l'aptitude à conduire un véhicule est conçu de manière à pouvoir exécuter un mode de réglage dans lequel le conducteur change des caractéristiques de commande du véhicule.

13. Dispositif d'amélioration de l'aptitude à conduire un véhicule selon au moins l'une des revendications 2 à 12, comportant en outre un bloc d'évaluation pour évaluer une aptitude à conduire un véhicule d'un conducteur, dans lequel le dispositif d'amélioration de l'aptitude à conduire un véhicule change des modes sélectionnables par le bloc de sélection de mode sur la base d'un point d'évaluation obtenu par le bloc d'évaluation.

14. Dispositif d'amélioration de l'aptitude à conduire un véhicule selon au moins l'une des revendications 2 à 13, comportant en outre un bloc de détection qui détecte la présence/absence d'un passager, dans lequel lorsqu'un passager est présent, le dispositif d'amélioration de l'aptitude à conduire un véhicule exécute automatiquement l'un quelconque du mode d'assistance à la conduite, du mode d'informations, du mode d'évaluation de l'aptitude à conduire un véhicule ou du mode de combinaison.

15. Dispositif d'amélioration de l'aptitude à conduire un véhicule selon la revendication 14, dans lequel le mode à exécuter automatiquement est conçu de manière à être sélectionnable par le conducteur.

16. Dispositif d'amélioration de l'aptitude à conduire un véhicule selon au moins l'une des revendications 3 à 15, dans lequel le bloc d'informations (4) présente des informations dans le mode informations et un résultat d'évaluation dans le mode d'évaluation de l'aptitude à conduire le véhicule à un conducteur en utilisant des sons et/ou la voix.

17. Procédé d'amélioration de l'aptitude à conduire un véhicule, comportant un mode d'évaluation de l'aptitude à conduire un véhicule dans lequel l'aptitude à conduire un véhicule du conducteur est évaluée et un résultat de l'évaluation est présenté au conducteur, comportant en outre les étapes consistant à détecter un état opérationnel du conducteur, détecter un état de déplacement d'un véhicule (20), calculer une accélération dans la direction longitudinale en tant qu'indicateur d'accélération sur la base d'une accélération latérale et d'une secousse latérale générées par le véhicule (20), et évaluer l'aptitude à conduire un véhicule du conducteur sur la base de l'indicateur d'accélération, de l'accélération générée par le véhicule (20), et d'une secousse.

18. Procédé d'amélioration de l'aptitude à conduire un véhicule selon la revendication 17, comportant en outre un mode d'assistance à la conduite dans lequel l'accélération du véhicule (20) est commandée sur la base de l'indicateur accélération, d'un mode d'informations dans lequel au moins l'un de l'indicateur d'accélération, de l'état opérationnel du conducteur ou de l'état de déplacement du véhicule (20) est présenté au conducteur, un mode de combinaison dans lequel au moins deux du mode d'assistance à la conduite, du mode d'informations, et du mode d'évaluation de l'aptitude à conduire un véhicule sont combinés, et

un bloc de sélection de mode (2) lequel sélectionne au moins l'un du mode d'assistance à la conduite, du mode d'informations, du mode d'évaluation de l'aptitude à conduire un véhicule et du mode de combinaison en réponse à une demande provenant du conducteur,

et comportant en outre l'étape consistant à établir le mode d'assistance à la conduite et le mode d'évaluation de l'aptitude à conduire un véhicule.

FIG. 1A

FIG. 1B

10 Control unit

1 — Vehicle information detecting block
(Vehicle speed V)
(Vehicle longitudinal acceleration Gx_d)
(Vehicle lateral acceleration Gy_d)
(Steering angle δ)
(Master cylinder pressure Pm)
(Accelerator pedal stroke amount)

2 — Mode selecting block
(Normal mode)
(Drive assist mode)
(Information mode)
(Evaluation of driving skill mode)

5 — External information acquiring block

3 — Driving skill computing block

4 — Information presenter
(Information display)
(Sound generator)
(Vibration generator)

6 — Brake actuator

7 — Brake lamp

8 — Electronic control throttle actuator

29

FIG. 2

(A)

Speed

Driver A

Driver B

Driver C

(B)

Longitudinal
acceleration

(C)

JERK

# FIG. 3

(A)

Steady turn

Deceleration, Turn

W[FR]

(B)

Acceleration

Lateral acceleration

Longitudinal acceleration

(C)

Wheel load change amount

W[FR]

Driver A

(D)

Acceleration

Lateral acceleration

Longitudinal acceleration

(E)

Wheel load change amount

W[FR]

Driver B

(F)

Acceleration

Lateral acceleration

Longitudinal acceleration

(G)

Wheel load change amount

W[FR]

Driver C

# FIG. 4

(A)

Relative
distance

Relative
distance X0

(B)

Relative
speed

(C)

Longitudinal
acceleration

Acceleration Gx0

(D)

JERK

JERK Jx0

# FIG. 5

## FIG. 6

Start

Acquire information on vehicle, outside, course — S000

$V \leqq VmodeLmt$ ? — S100 — yes

no

Compute total acceleration G_d — S200

$G\_d \leqq GmodeLmt$ ? — S300 — yes

no

Acquire mode information — S400

Mode judgment? — S500 — no

Normal mode | yes

yes — Drive assist mode

Information mode | no — Evaluation of driving skill mode

no | yes

S600 — Normal mode

S700 — Compute information mode

S800 — Compute evaluation of driving skill mode

S900 — Compute drive assist mode

Drive control of information presenter, brake actuator, brake lamp, electronic control throttle — S1000

Return

EP 2 161 641 B1

34

# FIG. 7

Start information mode

Load information
presentation settings — S701

Acceleration
instruction value
displayed? — S702

no

yes

Compute Gx_t_i — S703

Compute $\Delta Gx$ — S704

Reset good flag, deceleration
instruction, acceleration
instruction — S705

$|\Delta Gx| \leqq \Delta GLmt$? — S706

yes

no

$\Delta Gx > 0$? — S707

yes

no

Gx_t > 0? — S708

yes

no

S711

Acceleration
instruction = $\Delta Gx$

S710

Deceleration
instruction = $\Delta Gx$

S709

Turn on
good flag

$Jx\_d^2 + Jy\_d^2 > JrkLmt$? — S712

yes

no

Turn on excessive
JERK warning — S713

Compute information
presenter control instruction — S714

Return

FIG. 8

(a)

(b)

(c)

# FIG. 9

(a)

Distance: 50 m

(b)

30 s remaining

Distance: 20 m

(c)

20 s remaining

Distance: 15 m

FIG. 10

(a)

(b)

FIG. 11

## FIG. 12

Start evaluation of driving skill mode

Compute Gx_t_s, Jx_t_s — S801

Compute J_d, G_t, J_t — S802

Compute FG_d, FJ_d, FG_t, FJ_t — S803

Compute CJ_d, CJ_t, CReset — S804

Compute Jbar_d, Jbar_t — S805

S806
CReset <CRLmt? — yes

no

Skill evaluation J — S807

Reset FJ_d, FJ_t, CJ_d, CJ_t, Jbar_d, Jbar_t — S808

S809
G_d≧GLmt? — yes

no

Skill evaluation G — S810

Reset FG_d, FG_t — S811

Compute information presenter control instruction — S812

Return

## FIG. 13

FIG. 14

# FIG. 15

(A)

(B)

# FIG. 16

(a)

(c)

| PointJ | Displayed character string |
|--------|---------------------------|
| 100~91 | COOL!! |
| 90~71 | GOOD! |
| 70~40 | OK |
| 40~0 | BAD!! |

(b)

# FIG. 17

(a)

(b)

| PointG | Skill rank |
|--------|-----------|
| 100~96 | A |
| 95~76 | B |
| 75~51 | C |
| 50~26 | D |
| 25~0 | E |

# FIG. 18

EP 2 161 641 B1

```
                    ┌─────────────────────────┐
                    │   Start drive assist mode │
                    └─────────────────────────┘
                                 │
                                 ▼
         ┌──────────────────────────────────────┐
S901     │            Compute Gx_t_a             │
         └──────────────────────────────────────┘
                                 │
                                 ▼
         ┌──────────────────────────────────────┐
S902     │     Compute Gx_brk, Jx_brk,          │
         │       Gx_accel, Jx_accel             │
         └──────────────────────────────────────┘
                                 │
                                 ▼
                      ╱◆◆◆◆◆◆◆◆◆◆◆◆◆╲
S903               ╱  Gx_brk ≤ Gx_brk0  ╲       yes
                  ◆        and           ◆───────────────────────────┐
                   ╲  Gx_D < Gx_brk0?  ╱                             │
                      ╲◆◆◆◆◆◆◆◆◆◆◆◆◆╱                               │
                                 │ no                                │
                                 ▼                                   │
                        ╱◆◆◆◆◆◆◆◆◆◆◆╲          yes                  │
S904                   ◆ Gx_accel > Gxaccel0? ◆──────────┐           │
                        ╲◆◆◆◆◆◆◆◆◆◆◆╱           S920     │   S910    │
                                 │ no                     │           │
                                 ▼                        ▼           ▼
         ┌──────────────────────────────────┐  ┌──────────────┐ ┌──────────────┐
S905     │ Gx_brk_t=Gx_brk, Gx_accel_t=Gx_accel │ │Compute Gx_accel_t│ │Compute Gx_brk_t│
         │       Fbrk = 0, Faccel = 0        │  └──────────────┘ └──────────────┘
         └──────────────────────────────────┘         │           │
                                 │                     │           │
                                 ▼◄────────────────────┴───────────┘
         ┌──────────────────────────────────┐
         │   Compute drive control instruction │
S906     │ of information presenter, brake actuator,│
         │ brake lamp, electronic control throttle │
         └──────────────────────────────────┘
                                 │
                                 ▼
                         ┌──────────┐
                         │  Return  │
                         └──────────┘
```

## FIG. 19

Start computation of Gx_brk_t

S911 — Gx_brk > Gx_t_s ? — yes

no

S912 — Jx_brk > Jx_brkLmt or Fbrk = 1?

no

S913

Gx_brk_t = Gx_brk
Fbrk = 0

S914

Compute Gx_brk_t
Fbrk = 1

yes

S915

Gx_brk_t = Gx_t_s
Fbrk = 1

Return

## FIG. 20

Start computation of Gx_accel_t

no — Jx_accel > Jx_accelLmt or Faccel = 1? — S921

yes

Compute Gx_accel_t
Faccel = 1 — S923

no — Gx_accel > Gx_accel_t? — S924

yes

S922

Gx_accel_t = Gx_accel
Faccel = 0

Return

FIG. 21

(a)

(b)

FIG. 22

(a)

(b)

## FIG. 23

## FIG. 24

# FIG. 25

**10 Control unit**

**3**

| Vehicle information detecting block |
| --- |
| (Vehicle speed V) |
| (Vehicle longitudinal acceleration Gx_d) |
| (Vehicle lateral acceleration Gy_d) |
| (Steering angle δ) |
| (Master cylinder pressure Pm) |
| (Accelerator pedal stroke amount) |

1

| Mode selecting block |
| --- |
| (Normal mode) |
| (Drive assist mode) |
| (Information mode) |
| (Evaluation of driving skill mode) |
| (Driving recollection mode) |

2

5 — External information acquiring block

Driving skill computing block

| Information presenter |
| --- |
| (Information display) |
| (Sound generator) |
| (Vibration generator) |

4

| Brake actuator |
| --- |

6

| Brake lamp |
| --- |

7

| Electronic control throttle actuator |
| --- |

8

9 — Driver information storage block

FIG. 26

**Start**

Acquire information on vehicle, outside, course — S000

$V \leqq VmodeLmt$ ? — S100 / yes / no

Compute total acceleration G_d — S200

$G\_d \leqq GmodeLmt$ ? — S300 / yes / no

Vehicle stationary? — S110 / yes / no

Driving recollection mode? — S120 / no / yes

Acquire mode information — S400

Mode judgment? — S500 / no / yes

Normal mode

Information mode — S700A

Evaluation of driving skill mode — S800A / yes / no

Normal mode — S600

Perform computation 2 of information mode

Perform computation 2 of evaluation of driving skill mode

Compute drive assist mode — S900

Compute driving recollection mode — S1100

Compute driving skill — S950

Drive control of information presenter, brake actuator, brake lamp, electronic control throttle — S1000

**Return**

EP 2 161 641 B1

FIG. 27

```
┌─────────────────────────────────────┐
│  Start evaluation of driving skill mode │
└─────────────────────────────────────┘
                  │
                  ▼
┌─────────────────────────────────────┐
│       Compute Gx_t_s, Jx_t_s        │──── S801
└─────────────────────────────────────┘
                  │
                  ▼
┌─────────────────────────────────────┐
│        Compute J_d, G_t, J_t        │──── S802
└─────────────────────────────────────┘
                  │
                  ▼
┌─────────────────────────────────────┐
│   Compute FG_d, FJ_d, FG_t, FJ_t    │──── S803
└─────────────────────────────────────┘
                  │
                  ▼
┌─────────────────────────────────────┐
│     Compute CJ_d, CJ_t, CReset      │──── S804
└─────────────────────────────────────┘
                  │
                  ▼
┌─────────────────────────────────────┐
│        Compute Jbar_d, Jbar_t       │──── S805
└─────────────────────────────────────┘
                  │
      yes         ▼
   ┌─────◇ CReset < CRLmt ? ◇──── S806
   │              │ no
   │              ▼
   │  ┌─────────────────────────────┐
   │  │       Skill evaluation J    │──── S807
   │  └─────────────────────────────┘
   │              │
   │              ▼
   │  ┌─────────────────────────────┐
   │  │  Reset FJ_d, FJ_t, CJ_d, CJ_t,│──── S808
   │  │        Jbar_d, Jbar_t        │
   │  └─────────────────────────────┘
   │              │         S809
   │              ▼          yes
   │       ◇ G_d ≧ GLmt ? ◇────┐
   │              │ no          │
   │              ▼    S810     │
   │  ┌─────────────────────┐   │
   │  │   Skill evaluation G │   │
   │  └─────────────────────┘   │
   │              │      S813    │
   │              ▼             │
   │  ┌─────────────────────┐   │
   │  │ Save vehicle information │   │
   │  └─────────────────────┘   │
   │              │      S811    │
   │              ▼             │
   │  ┌─────────────────────┐   │
   │  │    Reset FG_d, FG_t  │   │
   │  └─────────────────────┘   │
   │              │             │
   └──────────────┤◄────────────┘
                  ▼
┌─────────────────────────────────────┐
│   Compute information presenter     │──── S812
│        control instruction          │
└─────────────────────────────────────┘
                  │
                  ▼
          ┌──────────────┐
          │    Return    │
          └──────────────┘
```

# FIG. 28

```
        ┌─────────────────────────────────┐
        │   Start driving skill computation │
        └─────────────────────────────────┘
                        │
                        ▼
                                               S951
yes        ◇ Drive assist mode? ◇
 │                      │ no
 │                                             S952
 │         ◇ Evaluation of driving skill mode? ◇  yes
 │                      │ no          S953
 │         ┌─────────────────────────┐
 │         │  Compute skill evaluation │
 │         └─────────────────────────┘
 │                      │
 │                      ▼
 │   ┌──────────────────────────────────────────┐
 │   │ Compute skill point, average skill evaluation point │  S954
 │   └──────────────────────────────────────────┘
 │                      │
 │                      ▼
 │   ┌──────────────────────────────────────────┐
 │   │ Save skill point, average skill evaluation point │  S955
 │   └──────────────────────────────────────────┘
 │                      │
 └──────────────────────┤
                        ▼
              ┌──────────────┐
              │    Return     │
              └──────────────┘
```

FIG. 29

Start information mode

Load information presentation settings — S701A

S702

Acceleration instruction value displayed?

no

yes

Compute Gx_t_i — S703

Compute ΔGx — S704

Reset good flag, deceleration instruction, acceleration instruction — S705

S706

$|\triangle Gx| \leqq \triangle GLmt$?

yes

no

S707

$\triangle Gx > 0$?

yes

no

Turn on good flag — S709

S708

Gx_t > 0?

yes

no

Deceleration instruction = ΔGx

S710

S711 — Acceleration instruction = ΔGx

S712

$Jx\_d^2 + Jy\_d^2 > JrkLmt$?

yes

no

S713

Turn on excessive JERK warning

S714 — Compute information presenter control instruction

Return

## FIG. 30

10 Control unit

Network communication block ~50

Vehicle information detecting block
(Vehicle speed V)
(Vehicle longitudinal acceleration Gx_d)
(Vehicle lateral acceleration Gy_d)
(Steering angle δ)
(Master cylinder pressure Pm)
(Accelerator pedal stroke amount)

3

Driving skill computing block

Information presenter
(Information display)
(Sound generator)
(Vibration generator) ~4

Mode selecting block
(Normal mode)
(Drive assist mode)
(Information mode)
(Evaluation of driving skill mode)
(Driving recollection mode)

2

Brake actuator ~6

Brake lamp ~7

Electronic control throttle actuator ~8

5 — External information acquiring block

9 — Driver information storage block

## FIG. 31

1

3

Vehicle information detecting block
(Vehicle speed V)
(Vehicle longitudinal acceleration Gx_d)
(Vehicle lateral acceleration Gy_d)
(Steering angle δ)
(Master cylinder pressure Pm)
(Accelerator pedal stroke amount)

Driving skill computing block

Information presenter
(Information display)
(Sound generator)
(Vibration generator) ~4

Mode selecting block
(Normal mode)
(Information presentation and evaluation mode)
(Driving recollection mode)

2B

9 — Driver information storage block

# FIG. 32

FIG. 33

Start information
presentation computation

Load information presentation settings — S701A

S702

Acceleration instruction
value displayed? — no / yes

Compute Gx_t_i — S703B

Compute ΔGx — S704B

Reset good flag, deceleration instruction,
acceleration instruction — S705

S706
|ΔGx|≦ΔGLmt? — yes

S709
Turn on good flag

S707
ΔGx>0? — yes

S708
Gx_t>0? — yes

Deceleration
instruction = ΔGx — S710

S711 — Acceleration
instruction = ΔGx

S712
Jx_d²+Jy_d²>JrkLmt? — yes

Turn on excessive
JERK warning — S713

no

Return

FIG. 34

```
            Start skill evaluation computation

              Compute Gx_t_s, Jx_t_s            S801B

              Compute J_d, G_t, J_t             S802

            Compute FG_d, FJ_d, FG_t, FJ_t      S803

            Compute CJ_d, CJ_t, CReset          S804

              Compute Jbar_d, Jbar_t            S805B
```

$$\text{yes} \quad \diamond \quad \text{CReset} < \text{CRLmt ?} \qquad S806$$

no

```
                 Skill evaluation J             S807

            Reset FJ_d, FJ_t, CJ_d, CJ_t,       S808
                   Jbar_d, Jbar_t
```

$$\diamond \quad \text{G\_d} \geqq \text{GLmt ?} \qquad S809 \quad \text{yes}$$

no

```
                 Skill evaluation G             S810

               Save vehicle information         S813

                 Reset FG_d, FG_t               S811
```

```
                      Return
```

FIG. 35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002074597 A
- JP 2004151803 A
- JP 2007133486 A
- DE 102007007896
- US 5991675 A
- US 2007145819 A
- US 2007001831 A